# EUROPÄISCHE PATENTSCHRIFT

(11) **EP 2 443 005 B1**
(45) Veröffentlichungstag und Bekanntmachung des Hinweises auf die Patenterteilung: **19.02.2014**
(21) Anmeldenummer: 10742101.8
(22) Anmeldetag: 16.06.2010
(51) Int. Cl.: B60P 1/00, B65G 1/02

(54) **TRANSPORTSYSTEM**
TRANSPORT SYSTEM
SYSTEME DE TRANSPORT

(30) Priorität: 16.06.2009 DE 202009008416 U; 19.01.2010 DE 202010001181 U; 01.06.2010 DE 202010007467 U
(43) Veröffentlichungstag der Anmeldung: 25.04.2012
(73) Patentinhaber: Westrick, Ludger, 46342 Velen-Ramsdorf (DE)
(72) Erfinder: Westrick, Ludger, 46342 Velen-Ramsdorf (DE)
(74) Vertreter: Michalski Hüttermann & Partner Patentanwälte
(86) Internationale Anmeldenummer: PCT/EP2010/058473
(87) Internationale Veröffentlichungsnummer: WO 2010/146089

(56) Entgegenhaltungen:
- EP-A2- 1 428 753
- DE-A1- 19 949 550
- GB-A- 903 229
- US-A- 4 884 935
- US-A- 5 388 939
- US-B1- 6 183 176

## Beschreibung

Die Erfindung betrifft ein Transportsystem mit einem in einem Laderaum eines Transportfahrzeugs angeordneten oder anbringbaren Ladegerüst und mit mindestens einem Ladeboden, der in das Ladegerüst einsetzbar und aus dem Ladegerüst entnehmbar ist, wobei das Ladegerüst Pfosten und daran angebrachte Bodenträger zum Aufnehmen des mindestens einen Ladebodens aufweist, wobei an den Bodenträgem und/oder Pfosten und an dem/jedem Ladeboden ein Verriegelungssystem mit zusammenwirkenden Arretierungsmitteln zum transportsicheren, lösbaren Arretieren des Ladebodens in dem Ladegerüst vorgesehen ist, wobei der Ladeboden Befestigungselemente für mindestens ein Ladungssicherungsmittel zur Transportsicherung von auf dem Ladeboden zu transportierenden Ladegütern aufweist und wobei die Ladegüter außerhalb des Laderaums auf dem Ladeboden ablegbar und mittels der Ladungssicherungsmittel für den Transport festlegbar sind, bevor der Ladeboden in das Ladegerüst eingesetzt wird.

Ein Transportsystem der eingangs genannten Art ist im Güterverkehr mit Transportfahrzeugen als Mehrstockverladung grundsätzlich bekannt. Dabei sind im bekannten Stand der Technik in regalartigen Ladegerüsten innerhalb des Laderaumaufbaus mehrere Ladeböden übereinander angeordnet, um eine möglichst große Volumenausnutzung für Stückguttransporte zu erzielen. Allerdings können vor allem im Linienverkehr die Art und Größe der zu transportierenden Stückgüter stark variieren. Dazu können bei den bekannten Mehrstockverladungen die Ladeböden innerhalb des Laderaumes in der Höhe unterschiedlich eingebaut werden. Dies ist allerdings relativ mühsam, da dieser Umbau innerhalb des Laderaumaufbaus vor sich gehen muss, der wegen zuvor angefahrener Stationen unter Umständen schon teilweise beladen ist. Zusätzlich ist der Fahrer für den sicheren Transport der Güter verantwortlich und muss deshalb die Transportsicherung der Güter auf den mehrstöckigen Ladeböden vornehmen. Dazu benötigt er einen ausreichenden Zugang zu den einzelnen Ladegütern, was eine enge Bestockung für eine optimale Raumausnutzung unmöglich macht. Bei einer angestrebten engen Beladung besteht damit die Gefahr, dass wegen schlechter Zugänglichkeit die Ladegüter in fahrlässiger Weise nur unzureichend gesichert werden.

Das Dokument EP 1 428 753 A2 zeigt ein Transportsystem der eingangs genannten Art. Dabei sind als Bodenträger entweder L-förmige Tragschienen mit aufeinander zu weisenden horizontalen Schenkeln oder U-förmige Tragschienen mit aufeinander zu weisenden U-Schenkeln vorgesehen. Rechtwinklig zu den Tragschienen ist jeweils ein deren hinteres Ende verbindendes Anschlagprofil mit U-förmigem Querschnitt angeordnet, wobei die U-Schenkel nach vorne weisen. Nahe dem vorderen Ende jeder Tragschiene ist je ein verschwenkbares Klemmelement angeordnet. Am Ladegerüst sind an dessen Vorderseite an den Gerüstpfosten jeweils türartig verschwenkbare sowie ver- und entriegelbare Sperrleisten angelenkt. Das Einsetzen eines Ladebodens in das Ladegerüst erfolgt hier durch horizontales Einführen des Ladebodens zwischen die Pfosten des Ladegerüsts in einer gegenüber den Tragschienen angehobenen Stellung. Dann folgt ein Absenken des Ladebodens auf die Tragschienen und schließlich ein horizontales Einschieben des Ladebodens in das Ladegerüst, bis das vorlaufende Ende des Ladebodens zwischen die U-Schenkel des Anschlagprofils und in Anlage an dieses eingeführt ist. Dann werden die Klemmelemente durch Verschwenken nach innen positioniert und festgedreht, um den Ladeboden in seinem nach außen weisenden Bereich nach unten gegen die Tragschienen zu pressen und so auch hier vertikale Bewegungen des Ladebodens relativ zum Ladegerüst zu unterbinden. Schließlich werden die Sperrleisten in Schließstellung verschwenkt und arretiert, um ein horizontales Verrutschen des Ladebodens nach außen zu verhindern.

Wenn bei einem einschlägigen Transportsystem ein Ladeboden in das Ladegerüst eingesetzt werden soll, befindet sich das Ladegerüst in der Praxis in den meisten Fällen in beziehungsweise auf einem Lastkraftwagen, der seinerseits auf einer befahrbaren Oberfläche, wie Straße oder Ladehof, steht. Eine exakt horizontale Ausrichtung des Ladegerüsts besteht dabei naturgemäß meistens nicht. Auf der anderen Seite wird der Ladeboden in der Praxis in den meisten Fällen von einem Gabelstapler zum Lastkraftwagen mit dem Ladegerüst befördert, wobei der Ladeboden von der Staplergabel getragen wird. Der Gabelstapler befindet sich dabei in der Regel entweder auf einer Laderampe oder auf derselben Fläche wie der Lastkraftwagen. Dabei führen Unebenheiten oder wechselnde Neigungen der Stand- beziehungsweise Bewegungsflächen sowie andere Einflüsse zu voneinander abweichenden Ausrichtungen zwischen dem Lastkraftwagen und dem Gabelstapler. Zu den anderen Einflüssen gehört beispielsweise eine veränderliche Ausrichtung des Lastkraftwagens infolge von Veränderungen seiner Last beim Beladen, das zu einem Einfedern führt. Erfahrungsgemäß ist keine Bewegungsfläche so eben, dass sich ein Gabelstapler über eine zum Beispiel der Tiefe des Ladegerüsts entsprechende Wegstrecke exakt horizontal bewegen lässt. Außerdem kann ein Ladeboden kaum so gleichmäßig beladen werden, dass er genau waagerecht und ohne Durchhängen zu einer Seite auf einer Staplergabel transportiert werden kann. Im Ergebnis ist zu beobachten, dass ein Ladeboden bei seinem Einsetzen in das Ladegerüst Lagefehler in drei verschiedenen Richtungen relativ zum Ladegerüst haben kann und in der Praxis meistens auch hat, nämlich ein Verkippen gegen die horizontale Ebene um eine Querachse des Gabelstaplers, ein Verkippen gegen die horizontale Ebene um eine Längsachse des Gabelstaplers und ein Verdrehen um eine vertikale Achse. Das Transportsystem nach EP 1 428 753 A2 kann nur die beiden erstgenannten Lagefehler ausgleichen; wenn der dritte Lagefehler (Verdrehen um die vertikale Achse) auftritt, was in der Praxis fast unvermeidbar ist, dann ist ein Einsetzen des Ladebodens in das Ladegerüst meist nicht mehr möglich. Dieses Phänomen ist allgemein bekannt bei Schubladen, die sich in einem verkanteten Zustand nicht mehr einschieben lassen. Ein Mensch kann die Verkantung ausgleichen und korrigieren; für einen Gabelstapler ist dies aber nicht ohne weiteres möglich, weil dieser keine Beweglichkeit in entsprechender Richtung aufweist. Der Fahrer des Gabelstaplers ist in solchen Fällen gezwungen, Rangierbewegungen zur entsprechenden Lagekorrektur durchzuführen, was umständlich und zeitraubend ist und oft nicht zum Erfolg führt.

Für die vorliegende Erfindung stellt sich daher die Aufgabe, ein Transportsystem der eingangs genannten Art zu schaffen, das die vorstehend dargelegten Nachteile vermeidet und bei dem die Ladegüter bei guter Zugänglichkeit sicher auf den Ladeböden verankert werden können und die Ladeböden bei einfacher Handhabung in dem Ladegerüst sicher sowie raumökonomisch angeordnet werden können.

Diese Aufgabe wird erfindungsgemäß gelöst mit einem Transportsystem der eingangs genannten Art, welches dadurch gekennzeichnet ist,
dass der Ladeboden und/oder das Ladegerüst Führungs- und Zentriermittel zur Unterstützung des Einsetzens des Ladebodens in das Ladegerüst aufweisen.

Mit dem erfindungsgemäßen Transportsystem wird vorteilhaft sowohl eine Erhöhung der Verkehrssicherheit als auch eine Erhöhung der Wirtschaftlichkeit des Transports von Ladegütern, insbesondere Stückgütern, mit Transportfahrzeugen, insbesondere Lastkraftwagen, Eisenbahnwaggons oder Containern, erreicht. Gleichzeitig können durch eine Verlagerung der Transportsicherungsmaßnahmen für die Ladegüter vom Inneren des Laderaumaufbaus nach außerhalb des Laderaumaufbaus und vom Transportfahrzeugfahrer hin zu örtlichem Verladepersonal die Belastung des Fahrers und die Ladezeiten des Transportfahrzeugs erheblich gesenkt werden. Dabei weist der Ladeboden in vorteilhafter Weise in sich oder an sich Befestigungselemente für mindestens ein Ladungssicherungsmittel zur Transportsicherung von auf dem Ladeboden zu transportierenden Ladegütern auf. Dies ergibt die Möglichkeit, einen Ladeboden schon vor der Ankunft des Transportfahrzeugs von örtlichem Verladepersonal mit den zu transportierenden Ladegütern beladen und für den Transport sichern zu lassen. Bei der Ankunft des Transportfahrzeugs braucht der fertig und sicher beladene Ladeboden nur noch von außerhalb des Laderaumaufbaus in das im Laderaumaufbau angeordnete Ladegerüst eingesetzt zu werden und der eingesetzte Ladeboden in seiner Transportstellung mittels des an den Bodenträgern und an dem Ladeboden vorgesehenen Verriegelungssystems mit den zusammenwirkenden Arretierungsmitteln transportsicher arretiert zu werden. Die Verantwortung des Fahrers kann sich dabei auf die Kontrolle der Transportsicherung der Güter und auf die Betätigung bzw. Kontrolle der Arretierung des Ladebodens in dem Ladegerüst beschränken.

Zweckmäßig wird das erfindungsgemäße Transportsystem für eine Mehrstockverladung genutzt, da dabei seine Vorteile besonders zum Tragen kommen. Es ist aber auch möglich, für eine nicht mehrstöckige Beladung das Ladegerüst und/oder die Ladebodenträger auf Höhe des Bodens des Laderaums des Transportfahrzeugs anzuordnen und einen oder mehrere Ladeböden auf dem Boden des Laderaums des Transportfahrzeugs entnehmbar anzuordnen. Auch hier besteht die vorteilhafte Möglichkeit, den Ladeboden schon vor der Ankunft des Transportfahrzeugs von örtlichem Verladepersonal mit den zu transportierenden Ladegütern beladen und für den Transport sichern zu lassen und dann den Ladeboden mit dem darauf gesicherten Ladegut in das Transportfahrzeug einzusetzen und darin zu sichern.

Ein weiterer Vorteil der Erfindung besteht darin, dass ein mit dem beschriebenen Transportsystem ausgestattetes Transportfahrzeug ohne die Erfordernis von Umbauten für einen konventionellen Einsatz geeignet bleibt, bei dem Ladegüter oder diese tragende Paletten zuerst in den Fahrzeugladeraum eingeladen und dann im Fahrzeugladeraum an Ort und Stelle manuell gesichert werden. Dabei können auch für eine mechanische Kopplung mit den Pfosten des Ladegerüsts geeignete Ladebalken und/oder Ladungssicherungsbalken eingesetzt werden, wenn das Fahrzeug nicht ohnehin noch konventionelle Montageschienen für konventionelle Ladebalken und/oder Ladungssicherungsbalken aufweist.

Das erfindungsgemäße Transportsystem kann ergänzend Fördergeräte umfassen, die zur Aufnahme und Fixierung eines oder mehrerer Ladeböden passend ausgebildet sind und die z.B. die Ladeböden innerhalb von Hallen und/oder auf Plätzen eines Logistikunternehmens oder Fertigungsbetriebes transportieren, wobei dies auch rechnergesteuert fahrerlos geschehen kann. Auch ein Einsatz auf z.B. Frachtflughäfen ist dabei möglich.

In weiterer Ausgestaltung können die Führungs- und Zentriermittel Einführschrägen oder Anschläge aufweisen.

Weiter können die Führungs- und Zentriermittel fest angebracht oder verstellbar sein.

Dabei können die die Führungs- und Zentriermittel Teile des Verriegelungssystems bilden.

Außerdem können die Führungs- und Zentriermittel als Zwischen- oder Füllstücke zwischen benachbarten Ladeböden dienen.

Zur besseren Raumausnutzung können verschiedene Ladeböden ihrem speziellen Raumbedarf entsprechend in der Höhe unterschiedlich in das Ladegerüst eingesetzt werden, indem das Ladegerüst so ausgeführt wird, dass die Bodenträger an den Pfosten höhenverstellbar sind. Die Höhenverstellung der Bodenträger kann dabei manuell oder durch einen Kraftantrieb, wie eine hydraulische oder pneumatische Kolben-Zylinder-Einheit oder eine motorisch angetriebene Spindel, erfolgen. Die Form der Bodenträger kann unterschiedlich sein; die Bodenträger können z.B. als punktuelle Auflage oder als Auflageleiste oder auch als Führungsleiste ausgeführt sein.

Zu einer guten Anpassungsfähigkeit des Transportsystems an wechselnde Anforderungen trägt auch bei, dass vorzugsweise die Bodenträger von den Pfosten abnehmbar sind.

Eine besonders sichere und wirtschaftliche Ausführungsform der Erfindung kann erreicht werden, wenn mittels des Verriegelungssystems eine selbsttätige oder fernbetätigte Verriegelung des Ladebodens in seiner Transportposition im Ladegerüst herstellbar ist und ein beabsichtigtes Entriegeln des Verriegelungssystems manuell oder fernbetätigt durchführbar ist.

Eine bevorzugte Weiterbildung sieht vor, dass das Verriegelungssystem durch eine den Ladeboden in das Ladegerüst einsetzende und aus dem Ladegerüst entnehmende Ladevorrichtung, insbesondere Gabelstapler oder Kran, betätigbar ist. Zeitaufwändige und mit der Gefahr von Fehlern verbundene manuelle Betätigungseingriffe werden hiermit vermieden.

In weiterer Ausgestaltung ist vorgesehen, dass das Verriegelungssystem durch die Be- bzw. Entlastung und/oder durch das Einführen/Anbringen bzw. Entfernen der Ladevorrichtung betätigbar ist.

Zur Erzielung einer hohen Sicherheit gegen selbsttätiges Lösen wird vorgeschlagen, dass das Verriegelungssystem zusätzlich durch die Entlastung und/oder durch das Entfernen der Ladevorrichtung form- oder kraftschlüssig in Entriegelungsrichtung sperrbar ist.

Zur Unterstützung der Entriegelungssperre ist zweckmäßig das Verriegelungssystem zusätzlich durch die Entlastung und/oder durch das Entfernen der Ladevorrichtung mittels mindestens eines elastischen Elements, wie Feder oder Gasdruckdämpfer, formschlüssig sperrbar.

Dabei kann das Verriegelungssystem durch die Entlastung und/oder durch das Entfernen der Ladevorrichtung mittels einer Vorbelastungskraft, wie Federkraft, sperrbar sein.

Eine Alternative zur vorstehend beschriebenen Ausführung sieht vor, dass das Verriegelungssystem sowohl zur Verriegelung als auch zur Entriegelung des Ladebodens manuell betätigbar ist. Hiermit wird eine technisch einfache Lösung ermöglicht, die auf der anderen Seite nur etwas mehr Bedienungsaufwand erfordert.

Eine konkrete, bevorzugte Ausführung des Verriegelungssystems des Transportsystems sieht vor, dass der Ladeboden an seinen mit je einem Bodenträger zusammenwirkenden Ecken je einen ein- und ausschwenkbaren oder ein- und ausschiebbaren, mit einer Öffnung im zugeordneten Bodenträger oder Pfosten in und außer Eingriff bringbaren Sicherungsarm zum Sichern des Ladebodens im Ladegerüst aufweist. Hiermit wird bei einer technisch relativ einfach, kompakt und stabil ausführbaren Konstruktion eine hohe Funktionssicherheit und lange Haltbarkeit erreicht.

Für ein einfaches und sicheres Bewegen sowie Einsetzen und Entnehmen eines Ladebodens ist bevorzugt vorgesehen, dass der Ladeboden wenigstens eine Aufnahme für die Gabel eines Gabelstaplers und/oder Mittel zum Befestigen von Anschlagmitteln eines Hebezeugs oder Krans aufweist. Vorzugsweise weist dabei die Aufnahme für die Gabel ein seitliches Übermaß auf, was eine gewisse seitliche Verschiebung des Ladebodens auf der Gabel erlaubt, wodurch das Einsetzen des Ladebodens in das Ladegerüst erleichtert wird.

Eine weitere Ausgestaltung sieht vor, dass der Ladeboden rahmenartig ausgeführt ist, um beispielsweise Behälter aufzunehmen, die keine durchgehende Ladebodenfläche benötigen. Dadurch kann der Ladeboden besonders leicht und materialsparend ausgebildet werden.

Weiter besteht die Möglichkeit, dass der Ladeboden mit einer oder mehreren Kugel- oder Rollenbahnen ausgestattet ist, um z.B. Behälter oder sonstige Ladegüter mit flacher Unterseite leicht und schnell auf den Ladeboden und von diesem weg bewegen zu können, wobei vorzugsweise weitere Rollen- oder Kugelbahnen dem Ladeboden während seines Be- und Entladens vor- bzw. nachgeordnet sind. Zum Fixieren des Ladegutes auf einem solchen Ladeboden sind die Rollen oder Kugeln der Rollen- oder Kugelbahnen zweckmäßig unter eine Ladeebene des Ladebodens absenkbar.

Weiter wird vorgeschlagen, dass der Ladeboden mit Wänden, ggf. auch mit einem Dach oder Deckel, als Ladungssicherungsmittel ausgeführt ist. Dabei kann wenigstens eine Wand als Tür oder Klappe ausgeführt sein, um das Innere des so gebildeten Behälters zugänglich machen zu können. Mit diesem als oben offener oder ganz geschlossener Behälter ausgebildeten Ladeboden können empfindliche Güter geschützt transportiert werden. Auch ist es denkbar, diesen behälterartigen Ladeboden mit für einen Transport in einem Frachtflugzeug passenden Befestigungselementen auszustatten, um einen problemlosen kombinierten Land- und Lufttransport zu ermöglichen. Dabei ist selbstverständlich vorgesehen, dass der behälterartige Ladeboden in sich so stabil ist, dass er schadlos sowohl in einem Ladegerüst eines Land-Transportfahrzeugs als auch in einem Frachtflugzeug transportiert werden kann.

Eine Ausgestaltung des Transportsystems sieht vor, dass das Ladegerüst lösbar und entnehmbar im Laderaum des Transportfahrzeugs angebracht ist. Dabei können z.B. separate Ladegerüstpfosten oder Teil-Ladegerüste auf dem Laderaumboden stehen und mittels Sicherungsmitteln lösbar mit dem Laderaumaufbau und/oder dem Fahrzeugrahmen verbindbar sein. Außerdem kann das Ladegerüst in seinen Abmessungen verstellbar ausgeführt sein. Dadurch können die Ladegerüste einfacher an die Laderaumaufbauten verschiedener Transportfahrzeuge angepasst werden. Auch können so vollständige Ladegerüste mit mehreren Ladeböden vorab beladen und für den Transport gesichert werden. Das vollständige Ladegerüst lässt sich dann in den Laderaumaufbau einsetzen und dort mit geeigneten Sicherungsmitteln als Ganzes für den Transport sichern, was ebenfalls einen erheblich geringeren Aufwand für den Transportfahrzeugfahrer bedeutet. Ein gesamtes Ladegerüst oder Teil-Ladegerüst kann dabei z.B. mittels eines Gabelstaplers von der Seite oder vom Heck des Transportfahrzeugs her in dessen Laderaum eingesetzt bzw. zur Seite oder zum Heck hin aus dem Laderaum entnommen werden. Befestigungsmittel für Anschlagmittel eines Hebezeuges an den Ladegerüstpfosten machen es dabei auch möglich, bei einem oberseitig zu öffnenden Laderaum ein gesamtes Ladegerüst von oben in den Laderaum einzusetzen bzw. nach oben aus dem Laderaum zu entnehmen.

Es besteht dabei auch die Möglichkeit, dass das Ladegerüst durch mehrere einzeln lösbare und entnehmbare Teil-Ladegerüste gebildet ist. Hierdurch werden kleinere und leichtere Einheiten gebildet, die einfacher zu handhaben sind.

Um bei Nichtbenutzung des Ladegerüsts oder der Teil-Ladegerüste diese platzsparend unterbringen und transportieren und lagern zu können und um ein Transportfahrzeug schnell an unterschiedliche Anforderungen anpassen zu können, ist vorgesehen, dass das Ladegerüst oder dessen Teil-Ladegerüste im Leerzustand zusammenfaltbar und/oder zerlegbar sind.

Alternativ kann der Laderaum mit einem fest angebrachten Ladegerüst oder als Ladegerüst ausgeführt sein. Die Ausführung mit einem fest angebrachten Ladegerüst ist zwar weniger variabel, erlaubt aber eine einfache Konstruktion des Ladegerüstes. Wenn der Laderaum als Ladegerüst ausgeführt ist, wird ebenfalls eine besonders einfache Konstruktion ermöglicht, die mit wenigen Teilen auskommt und ein geringes Eigengewicht aufweist. Der als Ladegerüst ausgeführte Laderaum kann dabei fest montiert sein oder alternativ als Ganzes oder in Teilen vom Transportfahrzeug abnehmbar und am Transportfahrzeug anbringbar sein.

Um eine einerseits einfache und andererseits stabile Konstruktion zu erzielen, ist in einer Ausgestaltung bevorzugt vorgesehen, dass zumindest ein Teil der Pfosten des Ladegerüsts durch Rungen oder Wände oder Wandverstärkungen des Laderaumaufbaus des Transportfahrzeugs gebildet ist. Hierdurch werden am Transportfahrzeug ohnehin vorhandene Teile vorteilhaft für das Ladegerüst mit genutzt. Wenn das Transportfahrzeug als Pfosten dienende Rungen aufweist, dann sind vorzugsweise die Rungen teilbar und/oder verschiebbar und/oder abnehmbar, um das Transportfahrzeug vielseitig einsetzen sowie einfach be- und entladen zu können.

In einer weiteren Ausführung der Erfindung ist vorgesehen, dass ein Boden des Laderaums selbst zumindest bereichsweise durch einen oder mehrere entnehmbare Ladeböden gebildet ist. Damit wird auch die unterste Ladeebene eines Transportfahrzeugs in das erfindungsgemäße System einbezogen und eine weitere Steigerung der Raumökonomie erreicht. Der Laderaumaufbau braucht dann keinen eigenen Boden mehr, denn das Ladegerüst oder die Teil-Ladegerüste können dann unmittelbar auf einem tragenden Teil des Fahrgestells des Transportfahrzeugs, wie dessen Längsträger, aufgesetzt werden.

Für eine hohe Stabilität und dynamische Belastbarkeit des Ladegerüstes ist es dabei vorteilhaft, wenn die Pfosten des Ladegerüsts Mittel zum Verbinden von Pfosten miteinander und/oder mit einem Laderaumaufbau und/oder mit einem Fahrzeugrahmen aufweisen. Dabei kann die Verbindung der Pfosten untereinander über den Laderaumaufbau geschehen, beispielsweise durch ein Verspannen und/oder Befestigen der Ladegerüstpfosten zwischen dem Laderaumboden, der Laderaumdecke und/oder den Laderaumwänden. Zwecks einfacher Befestigungsmöglichkeit kann vorgesehen werden, dass die Ladegerüstpfosten an ihrer Unterseite und/oder an ihrer Außenseite und/oder an ihrer Oberseite Mittel zur jeweiligen Befestigung an komplementären Befestigungsmitteln am Laderaumboden und/oder an der Laderaumdecke und/oder an Laderaumwänden aufweisen, mit denen eine transportsichere Festlegung des Ladegerüsts im Laderaumaufbau auf einfache Weise gewährleistet werden kann.

In jeder seiner Ausführungen können zur Vergrößerung der Stabilität des Ladegerüsts dessen Ladegerüstpfosten durch einen Hilfsrahmen verbunden sein, welcher z.B. aus horizontal und/oder diagonal zwischen den Ladegerüstpfosten verlaufenden Streben bestehen kann. Dabei sind die Teile des Hilfsrahmens selbstverständlich so angeordnet, dass sie das Einsetzen und Entnehmen der Ladeböden nicht behindern, beispielsweise an einer oder zwei Ladegerüst-Seitenflächen oder einer Ladegerüst-Rückseite.

Insbesondere um durchgehende oder sogar befahrbare Ladeflächen aus mehreren einander benachbarten Ladeböden zu bilden, wird vorgeschlagen, dass zwischen einander benachbarten Ladeböden Zwischen- oder Füllstücke anbringbar sind. Die Zwischen- oder Füllstücke können z.B. lose einlegbar oder von den Ladeböden abklappbar oder aus den Ladeböden ausziehbar sein.

Um Ladegüter auf dem Ladeboden fest und sicher fixieren zu können, ist vorgesehen, dass die Befestigungselemente des Ladebodens zum Befestigen der Sicherungsmittel durch material- und/oder formverstärkte Bodenbereiche und/oder durch in den Ladeboden integrierte Befestigungselemente gebildet sind. Beispielsweise sind dabei die Befestigungselemente durch insbesondere U-förmige Profilschienen gebildet, die mit ihrer Basis nach oben angeordnet sind, wobei die Basis eine Reihe von Ausnehmungen aufweist, in welchen die Sicherungsmittel wahlweise befestigbar sind. Die U-Schienen sorgen vorteilhaft gleichzeitig für eine hohe Biegefestigkeit des Ladebodens, was ihn auch für schwere Lasten geeignet macht, wobei eine entsprechende Stabilität des Ladegerüstes vorausgesetzt wird. Um eine ebene, die Ladegüter schonende Oberfläche des Ladebodens zu gewährleisten, ist zweckmäßig die Oberfläche der Basis der U-förmigen Profilschienen in einer Ebene mit einer Beladeoberfläche des Ladebodens angeordnet.

Damit nicht beladene, an einer Be- und Entladestation vorgehaltene oder in einem Transportfahrzeug mitgeführte Ladeböden platzsparend untergebracht werden können, wird vorgeschlagen, dass der Ladeboden zur Stapelung mehrerer unbeladener Ladeböden ineinander mit einer Randabstufung oder Randabschrägung versehen ist. Hiermit wird ein sicheres und wenig Raum beanspruchendes Stapeln leerer Ladeböden übereinander ermöglicht, wobei ein Ladebodenstapel sowohl in einem Ladegerüst als auch außerhalb davon gelagert oder transportiert werden kann.

Eine gute Raumausnutzung kann weiterhin erreicht werden, wenn das Flächenmaß des Ladebodens einem ganzzahligen Vielfachen des Flächenmaßes einer genormten Transportpalette, zuzüglich eines für das Be- und Entladen nötigen Bewegungsspiels, entspricht. Damit können auf einem Ladeboden auch mehrere genormte Transportpaletten gleichzeitig verankert werden, die dann mit entsprechend leistungsstarken Gabelstaplern oder Hebezeugen gemeinsam und bereits transportgesichert sehr schnell verladen werden können.

Um den Ladeboden leichter in das Ladegerüst einsetzen zu können und um den Ladeboden exakt an den Abstand der Pfosten des Ladegerüstes mit den Bodenträgern anpassen zu können, besteht die Möglichkeit, dass die Abmessungen des Ladebodens in wenigstens einer horizontalen Erstreckungsrichtung mittels Teleskopverstellung veränderbar sind.

Zur Vermeidung eines erhöhten Verschleißes und lauter Geräusche beim Einsetzen des Ladebodens in das Ladegerüst und beim Entnehmen des Ladebodens aus dem Ladegerüst schlägt die Erfindung vor, dass die Bodenträger und/oder der Ladeboden an ihren Berührungsflächen Gleitelemente aufweisen. Die Gleitelemente sind dabei vorzugsweise auswechselbar. Ein gut geeignetes, bevorzugtes Material für die Gleitelemente ist Kunststoff.

Ergänzend kann der Ladeboden an seinen seitlichen Kanten mit Gleitleisten aus Kunststoff versehen sein, um bei Berührungen zwischen Ladeboden und Ladegerüstpfosten während des Einsetzens des Ladebodens in das Ladegerüst und des Entnehmens des Ladebodens aus dem Ladegerüst Schäden zu vermeiden.

Für das Festlegen der Ladegüter auf dem Ladeboden können grundsätzlich bekannte und übliche Sicherungsmittel, wie Spanngurte oder Netze oder dergleichen, verwendet werden. Für das erfindungsgemäße Transportsystem ist aber vorzugsweise vorgesehen, dass das Ladungssicherungsmittel aus mindestens zwei, bei Bedarf auch mehr, spannbaren Zugmitteln, jeweiligen zugehörigen Spannvorrichtungen und Verbindungsmitteln zum Verbinden der Zugmittel mit den Befestigungsmitteln des Ladebodens besteht und dass jedes Zugmittel über die zugehörige Spannvorrichtung einzeln spannbar ist. Vorzugsweise greifen dabei alle Zugmittel gemeinsam, vorzugsweise gelenkig, an einer Zugknotenplatte an, wobei im Zustand der Ladungssicherung die Anordnung der Zugknotenplatte oberhalb des Ladebodens auf der Oberseite des Ladegutes vorgesehen ist. Hierdurch kann mit einem einzigen Ladungssicherungsmittel das Ladegut in allen Richtungen gesichert auf dem Ladeboden fixiert werden, sodass auch bei starken Beschleunigungen, wie Bremsvorgängen oder Kurvenfahrten des Transportfahrzeugs, kein Verrutschen der Ladegüter auf dem Ladeboden zu befürchten ist.

Im Folgenden werden Ausführungsbeispiele der Erfindung anhand einer Zeichnung erläutert. Die Figuren der Zeichnung zeigen:
- Figur 1: ein Transportsystem am Beispiel eines Sattelaufliegers, während eines Beladevorganges, in einer schematischen Ansicht,
- Figur 2: ein einzelnes Teil-Ladegerüst als Teil des Transportsystems, mit höhenverstellbaren Bodenträgern und einem ein Ladegut tragenden Ladeboden, in Ansicht schräg von vorne,
- Figur 3: einen einzelnen Ladeboden in einer Ansicht schräg von oben,
- Figur 4: einen Ausschnitt des Ladegerüstes an der Verbindungsstelle zwischen Ladeboden und Ladegerüstpfosten mittels eines Bodenträgers,
- Figur 5: das Ladegerüst aus Figur 2 während des Einsetzens eines zweiten Ladebodens, in Ansicht schräg von oben,
- Figur 6: das Transportsystem am Beispiel eines Lastzuges, in einem noch unbeladenen Zustand, in einer schematischen Ansicht,
- Figur 7: einen Ladeboden in perspektivischer Ansicht schräg von unten, zusammen mit einem Ausschnitt eines Ladegerüsts und mit einem Verriegelungssystem,
- Figur 8: drei Details A, B und C aus Figur 7 in vergrößerter Darstellung,
- Figur 9: ein weiteres einzelnes Teil-Ladegerüst mit einem Hilfsrahmen, in Ansicht schräg von vorne, zusammen mit einem vergrößerten Detail,
- Figur 10: einen an einem Pfosten eines Ladegerüsts angeordneten Bodenträger in arretiertem Zustand, im Vertikalschnitt,
- Figur 11: den Pfosten mit dem Bodenträger aus Figur 10, nun in entarretiertem Zustand, ebenfalls im Vertikalschnitt,
- Figur 12: ein Ladungssicherungsmittel des Transportsystems mit einer Zugknotenplatte und vier Zug- und Spannmitteln,
- Figur 13: eine Profilschiene des Ladebodens als Befestigung für Ladungssicherungsmittel, in Teil-Draufsicht,
- Figur 14: die Profilschiene in einem Teil-Längsschnitt durch eine Ausnehmung, und
- Figur 15: einen Ladeboden mit einem darauf mittels des Ladungssicherungsmittels gemäß Figur 12 festgelegten Ladegut.

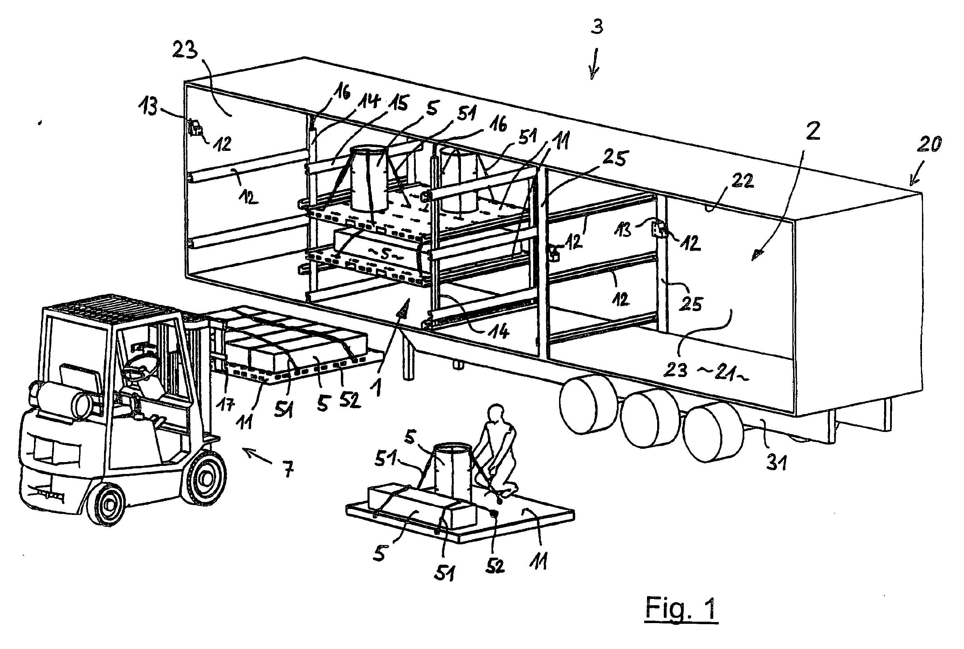

Figur 1 zeigt schematisch einen Beladevorgang eines mit dem Transportsystem gemäß der oben beschriebenen Erfindung ausgerüsteten Transportfahrzeugs 3, hier dargestellt mit einem Sattelauflieger, dessen Laderaumaufbau 20 mit einem Laderaum 2 zur Beladung seitlich geöffnet ist. Das Transportfahrzeugs 3 besitzt einen Fahrzeugrahmen 31, auf dem ein Laderaumboden 21 liegt. Seitlich und stirnseitig sind Laderaumwände 23 vorgesehen, von denen hier die dem Betrachter zugewandte Seitenwand geöffnet bzw. entfernt ist. Oberseitig wird der Laderaum 23 durch eine Laderaumdecke 22 abgeschlossen.

In dem Laderaum 2 ist in diesem Beispiel ein Ladegerüst 1 mit drei verschieden ausgeführten Teil-Ladegerüsten angeordnet, um verschiedene Ausführungsmöglichkeiten zu zeigen; in der Praxis hat ein Transportfahrzeug 3 sinnvoller Weise einheitliche Teil-Ladegerüste. In das Ladegerüst 1 sind hier bereits zwei Ladeböden 11 eingesetzt, die mit Ladegütern 5 beladen sind, welche mit Sicherungsmitteln 51 auf dem Ladeboden 11 transportsicher verankert sind.

Ein dritter Ladeboden 11 befindet sich gerade auf der Gabel eines als Ladevorrichtung 7 eingesetzten Gabelstaplers. Auch dieser dritte Ladeboden 11 ist mit Ladegütern 5 beladen und mit gurtförmigen Sicherungsmitteln 51, die über die Befestigungsmittel 52 mit dem Ladeboden 11 verbunden sind, bereits für den Transport gesichert. Die Sicherungsmittel 51 können dabei auch als Folienumhüllung, Transportnetze, Spannriemen und ähnliche Sicherungsmittel ausgeführt sein. Der Ladeboden 11 ist mit stirnseitigen Aufnahmen 17 für die Gabel des Gabelstaplers 7 ausgestattet und kann so sicher angehoben und in das Ladegerüst 1 eingesetzt werden.

Währenddessen wird ein vierter schon mit Ladegütern 5 beladener, vor dem Transportfahrzeug 3 auf dem Boden abgestellter Ladeboden 11 von Ladepersonal mit Sicherungsmitteln 51 zum Fixieren des Ladegutes 5 für den Transport versehen. Nach dem Anbringen der Ladungssicherungsmittel 51 kann auch der vierte Ladeboden 11 in das Ladegerüst 1 eingesetzt werden.

Die unterschiedlichen Ausführungen der Teil-Ladegerüste in Figur 1 sind zur Erläuterung der vielfältigen Ausführungsmöglichkeiten des Transportsystems dargestellt und unterscheiden sich im Wesentlichen in die Ladeböden 11 tragenden Bodenträgern 12 und in Befestigungselementen 13 zur Anbringung der Bodenträger 12 an einer oder mehreren Laderaumwänden 23 und/oder an separaten, im oder am Laderaumaufbau 2 angebrachten oder anbringbaren Ladegerüstpfosten 14.

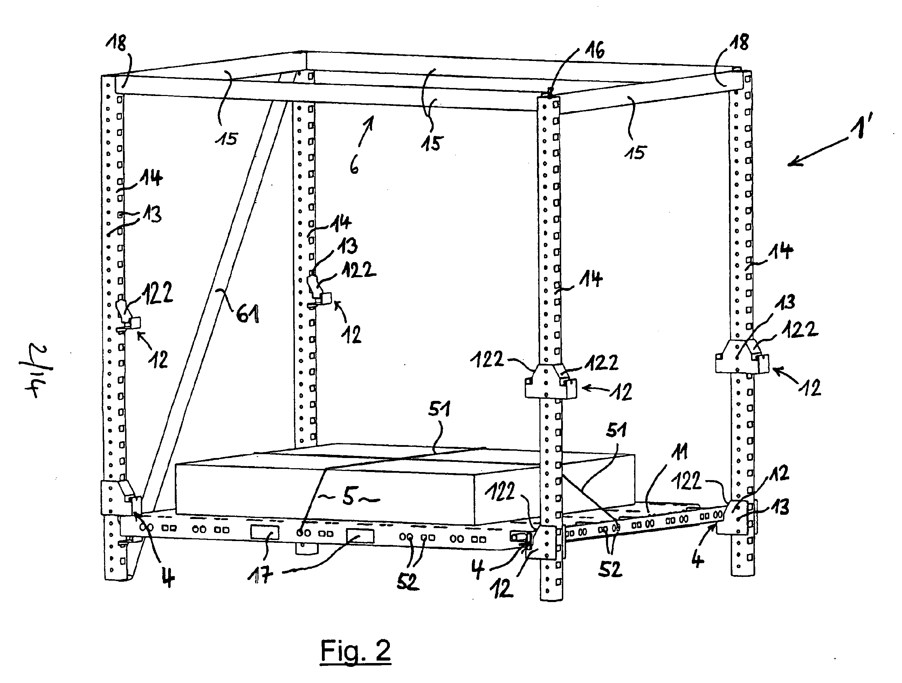

In Figur 2 ist ein einzelnes Teil-Ladegerüst 1' dargestellt, welches aus vier Ladegerüstpfosten 14 besteht, an denen über die Befestigungselemente 13 die Bodenträger 12 höhenveränderlich angebracht sind. Auf die Bodenträger 12 ist ein Ladeboden 11 aufgesetzt und mit Arretierungsmitteln eines Verriegelungssystems 4 transportsicher arretiert. Alle Bodenträger 12 sind mit einer oder zwei Einführschrägen 122 ausgeführt, die ein positionsgenaues Aufsetzen des Ladebodens 11 auf die Bodenträger 12 erleichtern. Auf dem Ladeboden 11 ist ein Ladegut 5 abgelegt, welches hier mit zwei über Kreuz angeordneten Ladungssicherungsmitteln 51 verankert ist, welche an passend ausgewählten Befestigungsmitteln 52 an oder in dem Ladeboden 11 befestigt sind.

Das Teil-Ladegerüst 1' ist zur Verbindung der Ladegerüstpfosten 14 miteinander mit einem Hilfsrahmen 6 versehen, der hier aus horizontalen Verbindungsstreben 15 und einer Diagonalstrebe 61 besteht. Das dargestellte Teil-Ladegerüst 1' kann auch außerhalb des Laderaums des Transportfahrzeugs mit Ladegütern 5 beladen werden, die mittels der Ladungssicherungsmitteln 51 und Befestigungsmittel 52 trans-, portgesichert werden können. Weitere Ladeböden 11 sind auf weitere Bodenträger 12 fertig beladen und gesichert aufsetzbar oder können regalartig insgesamt beladen und dann mit Transportsicherungen für die einzelnen Ladegüter versehen werden. Wenn das gesamte Teil-Ladegerüst 1' fertig beladen ist und die Ladegüter gesichert sind, kann das Teil-Ladegerüst 1' z.B. über die Mittel 18 zur Befestigung von Anschlagmitteln für Hebezeuge mit einem Hebezeug als Ganzes angehoben und von oben in einen Laderaum eingesetzt werden.

Ist alternativ das Teil-Ladegerüst 1' jedoch in der in Figur 1 dargestellten Ausführung in dem Laderaumaufbau 20 fest eingebaut, können an derselben oder einer weiteren Beladestation für das Transportfahrzeug 3 ein oder mehrere weitere Ladeböden 11 auf die weiteren, passend in ihrer Höhenlage einstellbaren Bodenträger 12 variabel aufgesetzt werden.

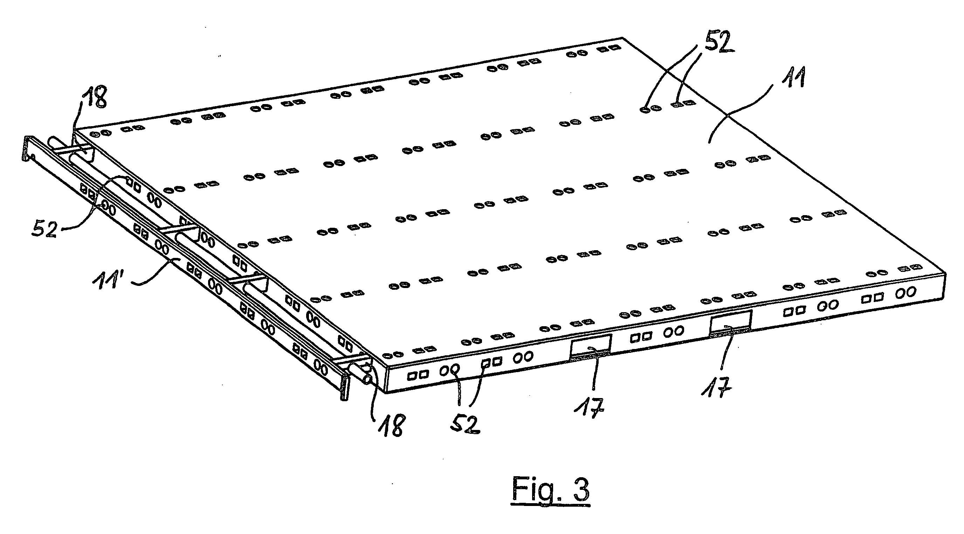

Figur 3 zeigt in Ansicht schräg von oben einen einzelnen Ladeboden 11 mit den verschiedenen Befestigungsmitteln 52 für die Ladungssicherungsmittel 51 für Ladegüter 5, die hier beide nicht dargestellt sind. Der Ladeboden 11 lässt sich über die Aufnahmen 17 zur Aufnahme der Gabel eines Gabel- oder Hubstaplers oder über die Mittel 18 zur Befestigung von Anschlagmitteln für Hebezeuge anheben und in das Ladegerüst einsetzen.

Der in Figur 3 linke Randteil 11' des Ladebodens 11 ist relativ zum übrigen Ladeboden 11 mittels Teleskopverstellung verschiebbar, um Toleranzen des Ladegerüsts und der daran angebrachten Bodenträger zwangfrei ausgleichen zu können. An der Vorderkante des Ladebodens 11 sind die zwei Aufnahmen 17 für die Gabel eines Gabelstaplers sichtbar.

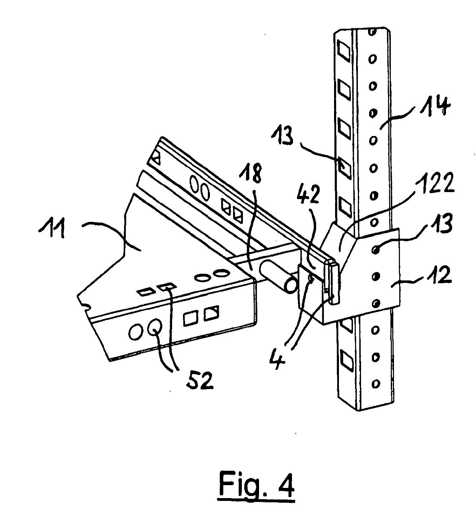

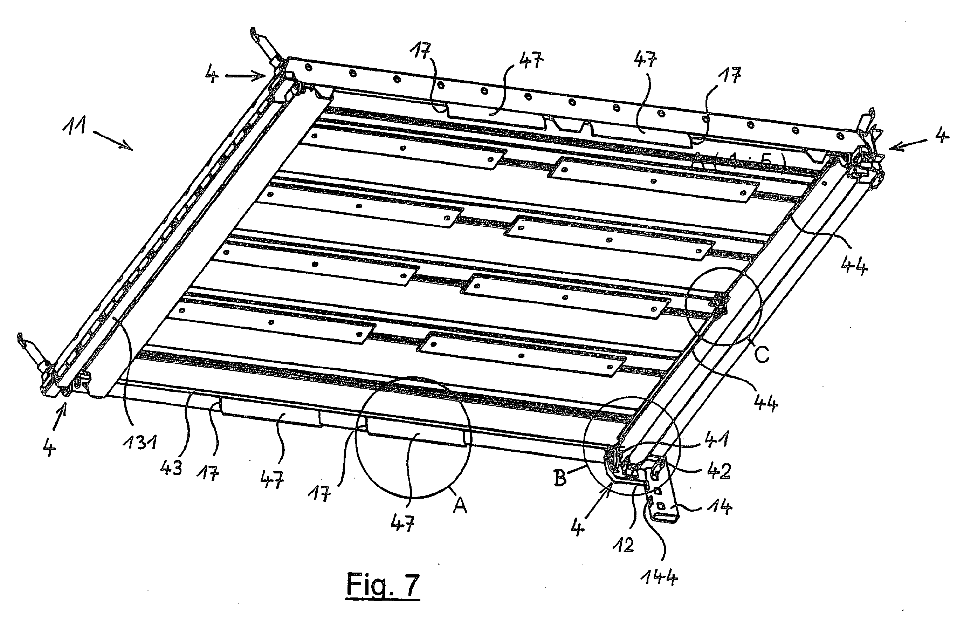

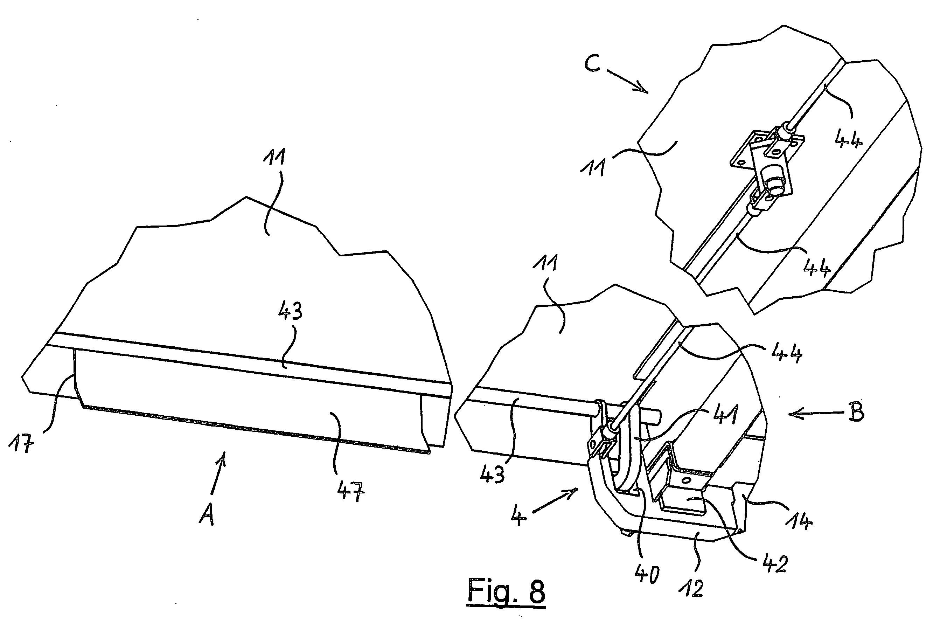

Beim Einsetzen des Ladebodens 11 in das Ladegerüst 1 wird, wie in Figur 4 dargestellt, der Ladeboden 11 mit an seinen Ecken vorgesehenen Füßen 42 auf die Bodenträger 12 aufgelegt und dort mit Arretierungsmitteln des Verriegelungssystems 4 transportsicher festgelegt. Diese Arretierungsmittel des Verriegelungssystems 4 können beispielsweise aus manuell steckbaren Sicherungsbolzen oder -stiften bestehen, wie in der Figur 4 dargestellt; sie können aber auch als anders ausgebildete Verriegelungselemente ausgeführt sein, die manuell, fernbetätigt oder selbsttätig verriegelt und/oder entriegelt werden können. Ein entsprechendes Beispiel wird weiter unten anhand der Figuren 7 und 8 noch erläutert.

Das Einsetzen des Ladebodens 11 in das Ladegerüst 1 bzw. Teil-Ladegerüst 1' und das positionsgenaue Aufsetzen des Ladebodens 11 auf die Bodenträger 12 kann durch Mittel zur Unterstützung der Positionierungsgenauigkeit, wie beispielsweise Einführschrägen, Anschläge, konische Zapfen und ähnliches vereinfacht werden, wobei in Figur 4 an der dem Ladeboden 11 zugewandten Seite des Bodenträgers 12 eine Einführschräge 122 beispielhaft dargestellt ist.

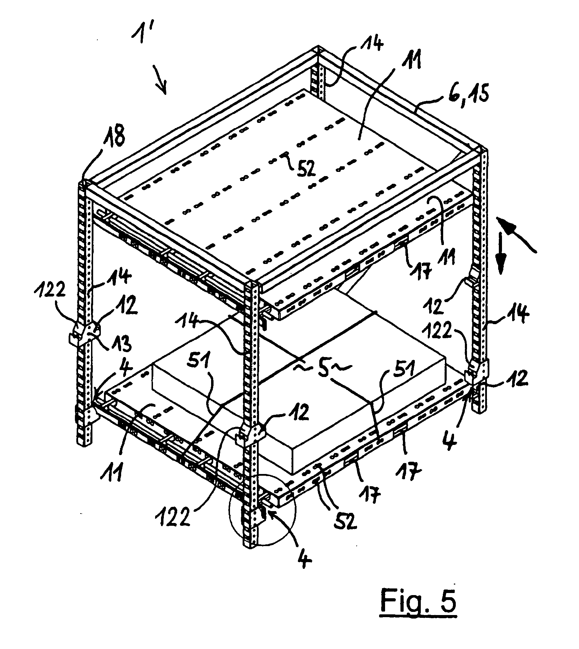

Der Ablauf des Einsetzens eines weiteren Ladebodens 11 in ein Teil-Ladegerüst 1' ist in Figur 5 noch einmal in Ansicht schräg von oben dargestellt. Gemäß dem ersten, oberen Bewegungspfeil wird der obere, neu einzusetzende, hier unbeladene Ladeboden 11 zunächst in im Wesentlichen horizontaler Richtung zwischen die Pfosten 14 des Teil-Ladegerüsts 1' eingeführt und dann gemäß dem zweiten, unteren Bewegungspfeil in im Wesentlichen vertikaler Richtung abgesenkt, bis er auf den zugehörigen, in passender Höhe vorab positionierten und fixierten Bodenträgern 12 aufsetzt. Nach dem Arretieren des Ladebodens 11 an den Bodenträgern 12 ist das Teil-Ladegerüst 1' transportfertig.

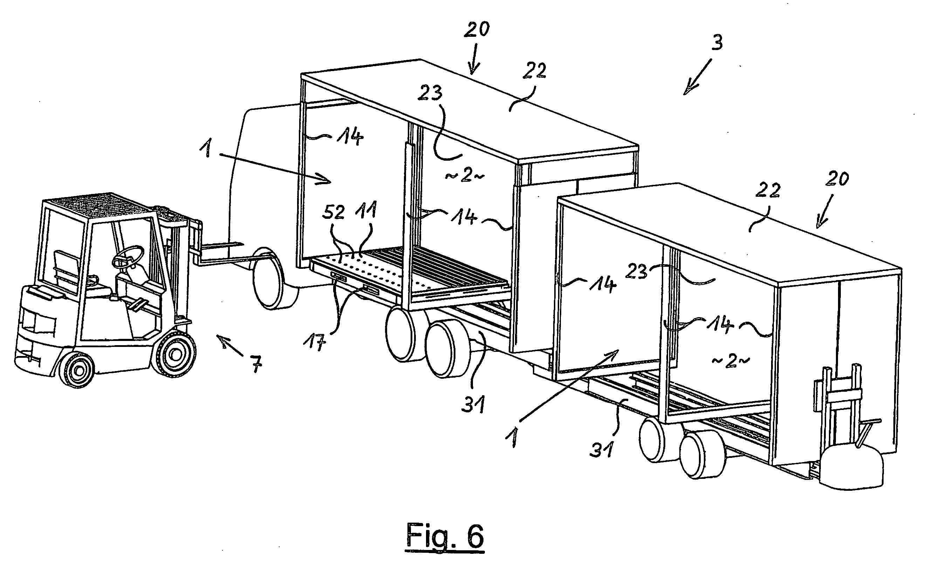

Figur 6 zeigt in ähnlicher perspektivischer Ansicht wie in Figur 1 ein weiteres Beispiel des Transportsystems, hier mit einem Transportfahrzeug 3 in Form eines Lastzuges, bestehend aus Zugmaschine und Anhänger. Beide Teile des Transportfahrzeugs 3 besitzen jeweils einen Laderaumaufbau 20 mit einem Laderaum 2, der seitlich durch Laderaumwände 23 und nach oben durch eine Laderaumdecke 22 begrenzt ist. Wie an der Zugmaschine angedeutet ist, kann die Laderaumdecke 22 als Hubdach ausgeführt sein, um das Be- und Entladen zu erleichtern.

In jedem Laderaum 2 ist je ein fest angebrachtes Ladegerüst 1 vorgesehen, welches in der vorstehend beschriebenen Art und Weise mit Ladeböden 11 bestückt werden kann.

Eine Besonderheit bei dem hier dargestellten Transportfahrzeug 3 besteht darin, dass die Zugmaschine und der Anhänger keinen eigenen Laderaumboden aufweisen; vielmehr wird jeweils der Laderaumboden durch die untersten Ladeböden 11 gebildet. Die untersten Ladeböden 11 sind, ebenso wie weitere Ladeböden, aus dem Laderaum 2 entnehmbar. Hierdurch wird der Laderaumaufbau 20 des Transportfahrzeugs 3 konstruktiv vereinfacht und das Gewicht des Transportfahrzeugs 3 wird reduziert, woraus vorteilhaft eine höhere Nutzlast resultiert.

Die Ladegerüste 1 besitzen auch hier, wie schon vorher beschrieben, jeweils vertikale Pfosten 14, an denen hier nicht dargestellte Bodenträger anbringbar sind, auf die jeweils ein Ladeboden 11 mit seinen vier Ecken auflegbar ist. Die jeweils untersten Ladeböden 11, die den Laderaumboden bilden, können dabei zusätzlich auf Längsträgern des Fahrzeugrahmens 31 des Transportfahrzeugs 3 aufliegen, um die Last günstig abzuleiten.

Der in Figur 6 dargestellte einzige Ladeboden 11 besitzt an seiner nach außen weisenden Stirnseite wieder zwei Aufnahmen 17 für die Gabel eines Gabelstaplers, der hier die Ladevorrichtung 7 bildet. Oberseitig besitzt der Ladeboden 11 die Befestigungsmittel 52 zum Befestigen der Ladungssicherungsmittel, mit denen auf dem Ladeboden 11 befindliche Ladegüter gesichert werden.

Figur 7 zeigt in perspektivischer Unteransicht einen Ladeboden 11 zusammen mit einem Verriegelungssystem 4, mit welchen der Ladeboden 11 bei einem mittels einer Ladevorrichtung, hier eines Gabelstaplers, erfolgenden Einsetzen in ein nur mit einem Ausschnitt eines Ladegerüstpfostens 14 dargestelltes Ladegerüst relativ zu diesem automatisch festlegbar und bei seinem Entnehmen aus dem Ladegerüst automatisch lösbar ist.

An allen vier Ecken des rechteckigen Ladebodens 11 ist je ein Fuß 42 vorgesehen, der jeweils mit einem Bodenträger 12 zusammenwirkt, welcher an dem Ladegerüstpfosten 14 angebracht ist, wie dies an der rechten hinteren Ecke des Ladebodens 11 beispielhaft gezeigt ist. Zwecks des lösbaren Festlegens des Ladebodens 11 an den Bodenträgern 12 besitzt das Verriegelungssystem 4 an jeder Ecke des Ladebodens 11 einen verschwenkbaren, hier hakenförmigen Sicherungsarm 41. Jeweils zwei vordere und zwei hintere Sicherungsarme 41 sind auf einer gemeinsamen, drehbar am Ladeboden 11 gelagerten Welle 43 drehfest angebracht. Mit jeder Welle 43 sind je zwei Klappen 47 ebenfalls drehfest verbunden, wobei die Klappen 47 jeweils eine Gabelaufnahme 17 des Ladebodens 11 überdecken.

Wenn die Gabel eines Gabelstaplers in die Gabelaufnahmen 17 eingeführt wird, werden dadurch die Klappen 47 automatisch um etwa 90° nach oben verschwenkt, wodurch eine entsprechende Verschwenkung der Sicherungsarme 41 bewirkt wird, nämlich aus deren Verriegelungsstellung in die Entriegelungsstellung. In dieser Entriegelungsstellung kann der Ladeboden 11, der nun von dem Ladegerüst gelöst ist, angehoben und aus dem Ladegerüst entnommen werden.

Umgekehrt wird ein Ladeboden 11 bei seinem Einsetzen in das Ladegerüst automatisch mit diesem verriegelt, indem die Gabel des Gabelstaplers aus den Gabelaufnahmen 17 herausgezogen wird. Hierdurch fallen die Klappen 47 unter Schwerkraftwirkung, gegebenenfalls durch Federkraft unterstützt, in ihre in Figur 7 gezeigte Grundstellung zurück, wodurch eine Verdrehung der Welle 43 und eine entsprechende Verschwenkung der Sicherungsarme 41 in Verriegelungsrichtung bewirkt wird. Hierdurch treten die Sicherungsarme 41 in Eingriff mit den zugehörigen Bodenträgern 4 und sichern den Ladeboden 11 gegen unerwünschte und schädliche vertikale Bewegungen relativ zum Ladegerüst.

Um auch bei Betätigung nur der Klappen 47 an einer Längsseite des Ladebodens 11 alle vier Sicherungsarme 41 des Verriegelungssystems 4 gleichzeitig zu betätigen, ist zwischen den vorderen und hinteren Sicherungsarmen 41 ein Übertragungsgestänge 44 angeordnet, welches für eine synchrone Verstellung aller Sicherungsarme 41 sorgt.

Zur Vermeidung von Verschleiß und Geräuschen beim Einsetzen des Ladebodens 11 in das Ladegerüst und beim Entnehmen des Ladebodens 11 aus dem Ladegerüst ist der Ladeboden 11 hier mit an seinen beiden seitlichen Kanten verlaufenden Gleitelementen 131 versehen, z.B. in Form von austauschbaren Kunststoffprofilen.

Figur 8 zeigt in jeweils vergrößerter Darstellung und räumlich funktional passender Anordnung relativ zueinander die drei Details A, B und C aus Figur 7 in vergrößerter Darstellung. Das Detail A zeigt eine der Klappen 47 an einer der Gabelaufnahmen 17 des Ladebodens 11, zusammen mit einem Abschnitt der Welle 43, mit der die Klappe 47 drehfest verbunden ist.

Das Detail B zeigt die Teile des Verriegelungssystems 4 an einer der vier Ecken des Ladebodens 11. Mit dem Ende der Welle 43 ist der hakenförmige Sicherungsarm 41 drehfest verbunden. In der in Figur 8 gezeigten Verriegelungsstellung greift der Sicherungsarme 41 in eine als Hakenaufnahme dienende Durchbrechung 40 des Bodenträgers 4 ein und sichert den Ladeboden 11 relativ zum Ladegerüst in vertikaler Richtung. Gleichzeitig liegt der an dieser Ecke des Ladebodens 11 vorgesehene Fuß 42 des Ladebodens 11 auf dem Bodenträger 12 auf und ist relativ zu diesem durch entsprechende gegenseitige formschlüssige Eingriffsmittel in horizontaler Richtung gesichert. Der Bodenträger 12 ist mit dem Ladegerüstpfosten 14 lösbar verbunden, welcher in Figur 8 nur in einem kleinen Ausschnitt sichtbar ist.

Das Detail C schließlich zeigt einen Abschnitt des Übertragungsgestänges 44, mit dem die Sicherungsarme 41 der einen Längsseite des Ladebodens 11 bewegungsmäßig mit den Sicherungsarmen 41 der anderen Längsseite des Ladebodens 11 gekoppelt sind. Hiermit wird eine synchrone Betätigung aller vier Sicherungsarme 41 bei Betätigung nur der Klappen 47 an einer Längsseite des Ladebodens 11 bewirkt, obwohl die Gabel eines Gabelstaplers immer nur von einer Seite des Ladebodens 11 her in dessen Gabelaufnahmen 17 eingeführt wird.

Anstelle der Wellen 43 und des Übertragungsgestänges 44 kann auch eine Seilzuganordnung mit der gleichen Funktion verwendet werden. Auch können die verschwenkbaren Sicherungsarme 41 durch funktional gleichwertige, axial verstellbare Riegelbolzen ersetzt werden.

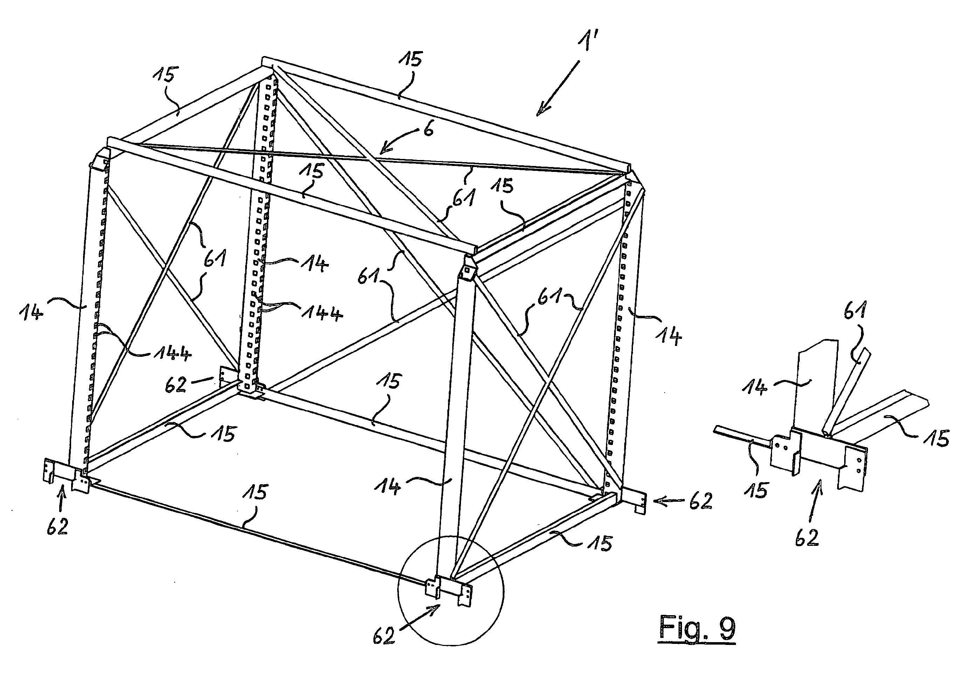

Figur 9 zeigt ein Beispiel für ein Teil-Ladegerüst 1', das zur Erzielung einer hohen Verwindungssteifigkeit mit einem Hilfsrahmen 6 verbunden ist. Das Teil-Ladegerüst 1' besitzt die vier vertikalen Pfosten 14, die jeweils mit in einem engen Raster angeordneten Durchbrechungen 144 zum Anbringen der hier nicht dargestellten Bodenträger versehen sind. Untereinander sind die Pfosten 14 an der linken und rechten sowie hinteren und oberen Seite jeweils durch horizontale Verbindungsmittel 15, hier Winkel- und U-Profile, und durch Diagonalstreben 61 verbunden. Wenn die Diagonalstreben nur auf Zug beansprucht werden, können sie auch durch Gurte oder Seile oder Drähte gebildet sein. Die dem Betrachter zugewandte Vorderseite des Teil-Ladegerüsts 1' ist dabei offen gehalten, damit von hier aus die Ladeböden eingesetzt und in umgekehrter Richtung entnommen werden können. Die horizontalen Verbindungsmittel 15, welche die unteren Enden der Pfosten 14 miteinander verbinden, können gleichzeitig dazu genutzt werden, die Last des Teil-Ladegerüsts 1' zu verteilen, so dass nicht die gesamte Last nur punktuell über jeweils das untere Ende der Pfosten 14 abgeleitet werden muss.

Eine Besonderheit dieses Teil-Ladegerüsts 1' besteht darin, dass es an dem unteren Ende seiner Pfosten 14 jeweils einen Rungenadapter 62 aufweist. Rechts in Figur 9 ist einer der Rungenadapter 62 als eingekreistes Detail des Teil-Ladegerüsts 1' in vergrößerter Darstellung gezeigt. Die Rungenadapter 62 sind geometrisch so ausgebildet, dass sie in einen formschlüssigen Eingriff mit Rungen eines Fahrzeugaufbaus treten können, wodurch auf sehr einfache Art und Weise das Teil-Ladegerüst in einem Laderaum des Transportfahrzeugs fixiert werden kann. Eine besonders günstige Verwendung dieses Teil-Ladegerüsts 1' ergibt sich bei Transportfahrzeugen, die mit verschwenkbaren Schieberungen ausgestattet sind, welche für ein Be- -und Entladen entweder von einzelnen Ladeböden oder des gesamten Teil-Ladegerüsts 1' mit ihrem unteren Ende vom Fahrzeugaufbau gelöst, vom Fahrzeugaufbau weggeschwenkt und dann seitwärts verschoben werden können. Umgekehrt kann das auf der Ladefläche des Transportfahrzeugs stehendes Teil-Ladegerüst 1' durch Verschieben der Rungen in eine mit den Rungenadaptern 62 übereinstimmende Position und Einschwenken der Rungen in die Rungenadapter 62 sowie Arretieren der Rungen am Aufbau festgelegt werden. Durch den formschlüssigen Eingriff zwischen den Rungenadaptern 62 und den Rungen kann das Teil-Ladegerüst 1' sich in horizontaler Richtung nicht mehr bewegen. Eine unerwünschte Vertikalbewegung wird entweder durch zusätzliche Sicherungsmittel oder durch die Laderaumdecke verhindert oder auf ein unschädliches Maß begrenzt.

Der vorstehend beschriebene Hilfsrahmen 6 kann entfallen, wenn ein Laderaumaufbau eines zugehörigen Transportfahrzeugs für die mechanische Stabilisierung des Ladegerüsts 1 oder Teil-Ladegerüsts 1' sorgt, z.B. indem der Aufbau in seinem geschlossenen Zustand das Ladegerüst 1 oder Teil-Ladegerüst 1' form- und/oder kraftschlüssig hält. Dies kann z.B. mit einem Aufbau mit in sich stabilen, faltbaren und/oder verschiebbaren und/oder verschwenkbaren Wänden erreicht werden.

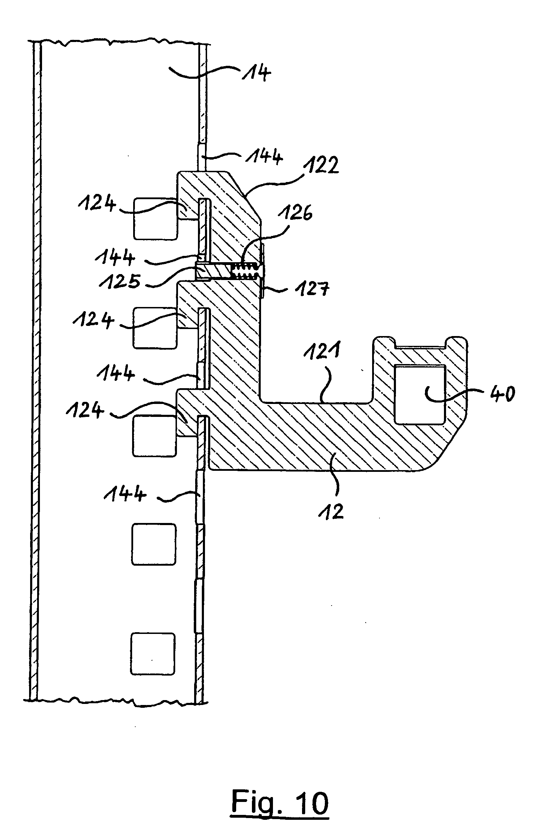

Figur 10 zeigt in einem Vertikalschnitt einen Ausschnitt des Ladegerüstpfostens 14 zusammen einem daran lösbar gehaltenen Bodenträger 12. Der Ladegerüstpfosten 14 besitzt die in einem Raster angeordnete Durchbrechungen 144, die zur Aufnahme von in einem entsprechenden Raster angeordneten Einhängehaken 124 des Bodenträgers 12 dienen. Zur Arretierung des Bodenträgers 12 relativ zu dem Ladegerüstpfosten 14 dient ein Riegelzapfen 125, der in der Schnittebene sowie senkrecht zur Längsrichtung des Ladegerüstpfostens 14 axial verschieblich im Bodenträger 12 geführt ist. Mittels einer Schraubenfeder 126 wird der Riegelzapfen 125 in seine Verriegelungsrichtung beaufschlagt. Sofern keine äußeren sonstigen Kräfte auf den Riegelzapfen 125 einwirken, nimmt dieser seine in Figur 10 gezeigte Verriegelungsstellung ein, in der er oberhalb des mittleren Einhängehakens 124 in die zugehörige Durchbrechung 144 des Ladegerüstpfostens 14 eingreift. In dieser Stellung des Riegelzapfens 125 kann der Bodenträger 12 nicht mehr nennenswert nach oben bewegt werden und somit auch nicht aus dem Ladegerüstpfosten 14 ausgehängt werden.

In seinem vom Ladegerüstpfosten 14 abgewandten Bereich besitzt der Bodenträger 12 oben eine Einführschräge 122 und weiter unten die Fußauflage 121, auf der sich der zugehörige Fuß 42 des hier nicht dargestellten Ladebodens 11 im eingesetzten Zustand abstützt. Im äußeren Endbereich des Bodenträgers 12 ist die Sicherungsarm-Aufnahme in Form der rechteckigen Durchbrechung 40 als Teil des Verriegelungssystems 4 angeordnet.

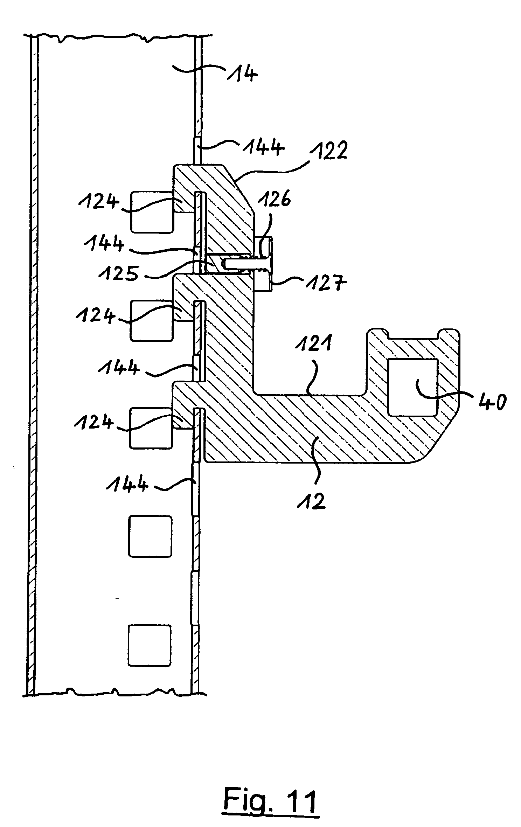

Wenn der Bodenträger 12 an dem Ladegerüstpfosten 14 versetzt oder ganz von dem Ladegerüstpfosten 14 entfernt werden soll, wird mittels eines Griffstücks 127 der Riegelzapfen 125 gegen die Kraft der Feder 126 nach außen, das heißt in einer Richtung vom Ladegerüstpfostens 14 weg, bewegt, bis der Riegelzapfen 125 aus der Durchbrechung 144 entfernt ist, wie dies in Figur 11 gezeigt ist. In dieser Stellung des Riegelzapfens 125 kann der Bodenträger 12 relativ zum Ladegerüstpfosten 14 so weit nach oben bewegt werden, dass die Einhängehaken 124 durch die Durchbrechungen 144 herausgezogen werden können. Der Bodenträger 12 kann dann an einer gewünschten anderen Stelle des Ladegerüstpfostens 14 erneut mit diesem verbunden werden, wobei nach dem Einhängen des Bodenträgers 12 in den Ladegerüstpfosten 14 der Riegelzapfen 125 durch die Wirkung der Feder 126 selbsttätig wieder seine in Figur 10 gezeigte Verriegelungsstellung einnimmt.

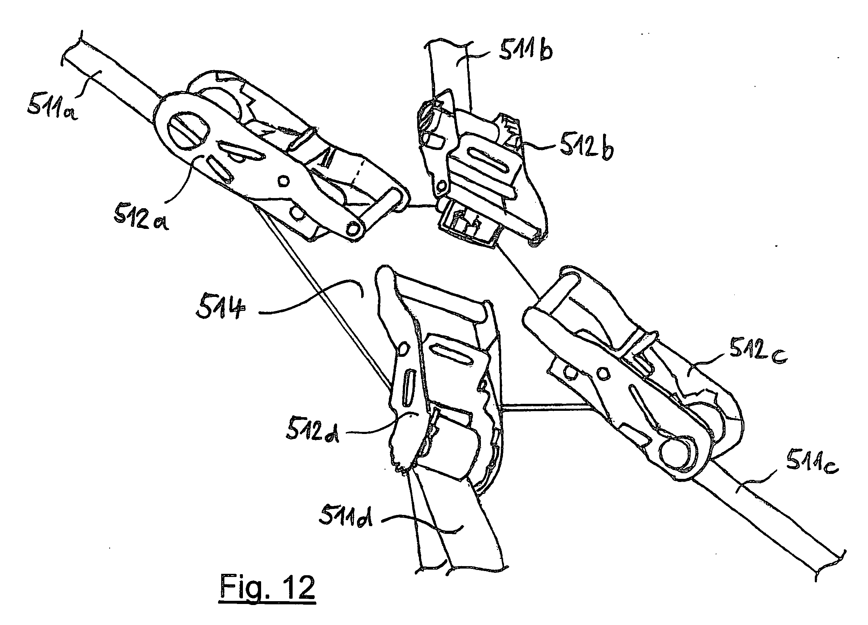

In Figur 12 ist ein Beispiel eines Ladungssicherungsmittels 51, bestehend aus einer Zugknotenplatte 514, vier Zugmitteln 511 a-d und vier Spannmitteln 512a-d, dargestellt. Die Zugmittel 511a-d sind hier Spanngurte und die Spannmittel 512a-d sind hier Spannratschen, welche fest oder, was bevorzugt ist, gelenkig mit der Zugknotenplatte 514 verbunden sind. Die Zugknotenplatte 514 kann dabei aus einem relativ starren Material oder auch aus einem flexiblen Material, beispielsweise aus einer textilverstärkten Gummimatte, hergestellt sein.

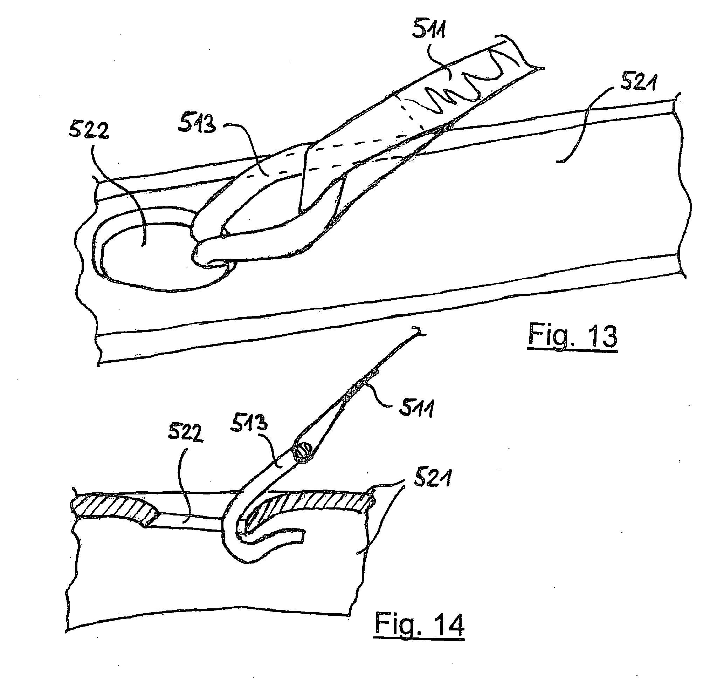

Weiter zeigt die Zeichnung in Figur 13 in Draufsicht und in Figur 14 im Längsschnitt eine im Querschnitt U-förmige Profilschiene 521 als Teil des Ladebodens 11, wobei der Ladeboden 11 mehrere solcher Profilschienen 521 parallel zueinander aufweist. Die nach oben weisende Oberfläche der Basis der U-förmigen Profilschiene 521 ist in einer Ebene mit einer Beladeoberfläche des im Übrigen nicht dargestellten Ladebodens 11 angeordnet. Die Profilschiene 521 dient zur Befestigung der Ladungssicherungsmittel 51 und besitzt dazu in einem Rasterabstand angeordnete Ausnehmungen 522, von denen in Figur 13 und Figur 14 jeweils nur eine sichtbar ist. Ein Zughaken 513 des Zugmittels 511 kann hierbei sicher hinter einer nach unten umgebördelten oder durchgepressten Kante der Ausnehmung 522 verhakt werden und die durch die Spannmittel 512 aufgebrachten Spannkräfte zur Ladungssicherung übertragen. Der Zughaken 513 ist dabei so geformt und gebogen, dass er an die Form der Ausnehmung 522 angepasst ist, sodass Zugkräfte auch unter einem steileren Winkel, bis zur Senkrechten oder darüber hinaus, sicher übertragen werden können, ohne dass die Gefahr besteht, dass der Zughaken 513 sich aus der Ausnehmung 522 ungewollt lösen kann.

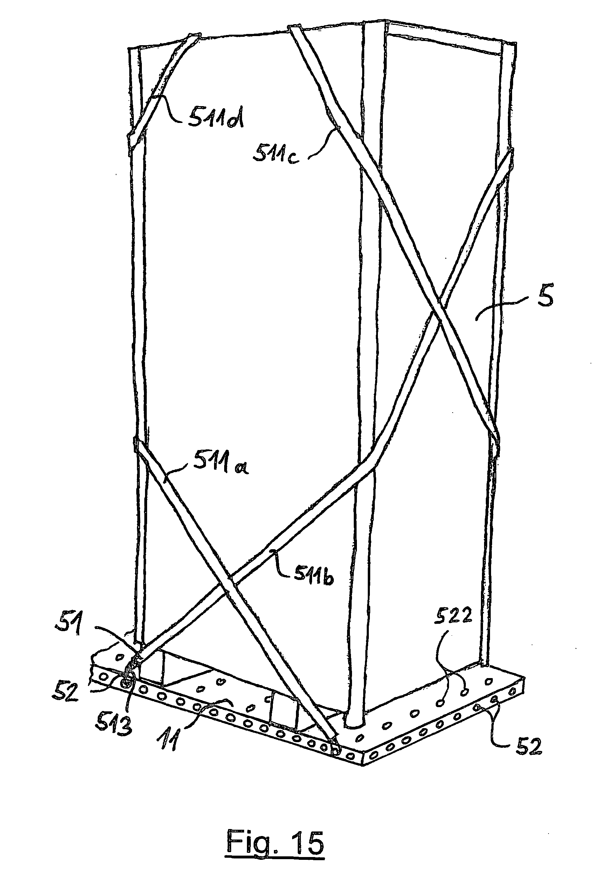

Figur 15 zeigt das Ladungssicherungsmittel 51 nach Figur 12 im Zustand der Sicherung eines Ladegutes 5 auf einem Ladeboden 11. Die Zugmittel 511 sind, ausgehend von der oben auf dem Ladegut 5 angeordneten Zugknotenplatte 514 (hier nicht sichtbar), über Kreuz und über Eck verlaufend angeordnet und jeweils mit ihrem unteren Ende in stirnseitige Befestigungsmittel, hier Bohrungen, des Ladebodens eingehakt. Die Zugmittel 511 benötigen so bei günstigen Haltewinkeln der Zugkraft nur einen geringen Raumbedarf bei gleichzeitig zuverlässiger Fixierung des Ladeguts 5 auf dem Ladeboden 11. Die Spannvorrichtungen 512 sind durch ihre zentrale Anordnung an der Zugknotenplatte 514 auf der Oberseite des Ladeguts 5 leicht bedienbar und auf ihren gespannten Zustand überprüfbar.

**Bezugszeichenliste:**

| Zeichen | Bezeichnung |
|---|---|
| 1 | Ladegerüst |
| 1' | Teil-Ladegerüste |
| 11 | Ladeboden |
| 11' | Randteil |
| 12 | Bodenträger |
| 121 | Fußauflage |
| 122 | Einführschräge |
| 124 | Einhängehaken |
| 125 | Riegelzapfen |
| 126 | Feder |
| 127 | Griffstück an 125 |
| 13 | Befestigungselemente für 12 |
| 131 | Gleitelemente |
| 14 | Pfosten von 1 |
| 144 | Durchbrechungen in 14 für 124 und 125 |
| 15 | Verbindungsmittel für 14 mit 14 |
| 16 | Verbindungsmittel für 14 mit 20 |
| 17 | Aufnahmen für Gabelstaplergabel |
| 18 | Anschlagmittel für Hebezeuge |
| | |
| 2 | Laderaum |
| 20 | Laderaumaufbau |
| 21 | Laderaumboden |
| 22 | Laderaumdecke |
| 23 | Laderaumwände |
| 25 | Laderaumpfosten |
| 3 | Transportfahrzeug |
| 31 | Fahrzeugrahmen |
| | |
| 4 | Verriegelungssystem für 11 |
| 40 | Öffnung |
| 41 | Sicherungsarm |
| 42 | Fuß an 11 |
| 43 | Welle |
| 44 | Übertragungsgestänge |
| 47 | Klappen an 17 |
| | |
| 5 | Transportgüter |
| 51 | Sicherungsmittel für 5 |
| 511a, b, c, d | Zugmittel |
| 512a, b, c, d | Spannvorrichtung für 511a, b, c, d |
| 513 | Zugmittelverbindung zu 52 |
| 514 | Zugknotenplatte |
| 52 | Befestigungsmittel an 11 für 51 |
| 521 | Profilschiene für 52 |
| 522 | Ausnehmung in 521 |
| | |
| 6 | Hilfsrahmen für 1 |
| 61 | Diagonalstreben |
| 62 | Rungenadapter |
| | |
| 7 | Ladevorrichtung |

## Patentansprüche

1. Transportsystem mit einem in einem Laderaum (2) eines Transportfahrzeugs (3) angeordneten oder anbringbaren Ladegerüst (1) und mit mindestens einem Ladeboden (11), der in das Ladegerüst (1) einsetzbar und aus dem Ladegerüst (1) entnehmbar ist, wobei das Ladegerüst (1) Pfosten (14) und daran angebrachte Bodenträger (12) zum Aufnehmen des mindestens einen Ladebodens (11) aufweist, wobei an den Bodenträgern (12) und/oder Pfosten (14) und an dem/jedem Ladeboden (11) ein Verriegelungssystem (4) mit zusammenwirkenden Arretierungsmitteln (40, 41) zum transportsicheren, lösbaren Arretieren des Ladebodens (11) in dem Ladegerüst (1) vorgesehen ist, wobei der Ladeboden (11) Befestigungselemente (52) für mindestens ein Ladungssicherungsmittel (51) zur Transportsicherung von auf dem Ladeboden (11) zu transportierenden Ladegütern (5) aufweist und wobei die Ladegüter (5) außerhalb des Laderaums (2) auf dem Ladeboden (11) ablegbar und mittels der Ladungssicherungsmittel (51) für den Transport festlegbar sind, bevor der Ladeboden (11) in das Ladegerüst (1) eingesetzt wird,
**dadurch gekennzeichnet,**
**dass** der Ladeboden und/oder das Ladegerüst (1) Führungs- und Zentriermittel zur Unterstützung des Einsetzens des Ladebodens in das Ladegerüst (1) und zur Unterstützung der Positionierungsgenauigkeit aufweisen.

2. Transportsystem nach Anspruch 1, **dadurch gekennzeichnet, dass** die Führungs- und Zentriermittel Einführschrägen oder Anschläge aufweisen.

3. Transportsystem nach Anspruch 1 oder 2, **dadurch gekennzeichnet, dass** die Führungs- und Zentriermittel fest angebracht oder verstellbar sind.

4. Transportsystem nach einem der vorhergehenden Ansprüche, **dadurch gekennzeichnet, dass** die Führungs- und Zentriermittel Teile des Verriegelungssystems (4) bilden.

5. Transportsystem nach einem der vorhergehenden Ansprüche, **dadurch gekennzeichnet, dass** die Führungs- und Zentriermittel als Zwischen- oder Füllstücke zwischen benachbarten Ladeböden dienen.

6. Transportsystem nach einem der vorhergehenden Ansprüche, **dadurch gekennzeichnet, dass** die Bodenträger (12) an den Pfosten (14) höhenverstellbar sind.

7. Transportsystem nach einem der vorhergehenden Ansprüche, **dadurch gekennzeichnet, dass** die Bodenträger (12) von den Pfosten (14) abnehmbar sind.

8. Transportsystem nach einem der vorhergehenden Ansprüche, **dadurch gekennzeichnet, dass** mittels des Verriegelungssystems (4) eine selbsttätige oder fernbetätigte Verriegelung des Ladebodens (11) in seiner Transportposition im Ladegerüst (1) herstellbar ist und dass ein beabsichtigtes Entriegeln des Verriegelungssystems (4) manuell oder fernbetätigt durchführbar ist.

9. Transportsystem nach Anspruch 8, **dadurch gekennzeichnet, dass** das Verriegelungssystem (4) durch eine den Ladeboden (11) in das Ladegerüst (1) einsetzende und aus dem Ladegerüst (1) entnehmende Ladevorrichtung (7), insbesondere Gabelstapler oder Kran, betätigbar ist.

10. Transportsystem nach Anspruch 9, **dadurch gekennzeichnet, dass** das Verriegelungssystem (4) durch die Be- bzw. Entlastung und/oder durch das Einführen/Anbringen bzw. Entfernen der Ladevorrichtung (7) betätigbar ist.

11. Transportsystem nach Anspruch 9 oder 10, **dadurch gekennzeichnet, dass** das Verriegelungssystem (4) zusätzlich durch die Entlastung und/oder durch das Entfernen der Ladevorrichtung (7) form- oder kraftschlüssig in Entriegelungsrichtung sperrbar ist.

12. Transportsystem nach einem der Ansprüche 9 bis 11, **dadurch gekennzeichnet, dass** das Verriegelungssystem (4) zusätzlich durch die Entlastung und/ oder durch das Entfernen der Ladevorrichtung (7) mittels mindestens eines elastischen Elements, wie Feder oder Gasdruckdämpfer, formschlüssig sperrbar ist.

13. Transportsystem nach einem der Ansprüche 9 bis 12, **dadurch gekennzeichnet, dass** das Verriegelungssystem (4) durch die Entlastung und/oder durch das Entfernen der Ladevorrichtung (7) mittels einer Vorbelastungskraft, wie Federkraft, sperrbar ist.

14. Transportsystem nach einem der Ansprüche 1 bis 7, **dadurch gekennzeichnet, dass** das Verriegelungssystem (4) sowohl zur Verriegelung als auch zur Entriegelung des Ladebodens (11) manuell betätigbar ist.

15. Transportsystem nach einem der vorhergehenden Ansprüche, **dadurch gekennzeichnet, dass** der Ladeboden (11) an seinen mit je einem Bodenträger (12) zusammenwirkenden Ecken je einen ein- und ausschwenkbaren oder ein- und ausschiebbaren, mit einer Öffnung (40) im zugeordneten Bodenträger (12) oder Pfosten (14) in und außer Eingriff bringbaren Sicherungsarm (41) zum Sichern des Ladebodens (11) im Ladegerüst (1) aufweist.

16. Transportsystem nach einem der vorhergehenden Ansprüche, **dadurch gekennzeichnet, dass** der Ladeboden (11) wenigstens eine Aufnahme (17) für die Gabel eines Gabelstaplers (7) und/oder Mittel (18) zum Befestigen von Anschlagmitteln eines Hebezeugs oder Krans aufweist.

17. Transportsystem nach einem der vorhergehenden Ansprüche, **dadurch gekennzeichnet, dass** der Ladeboden (11) rahmenartig ausgeführt ist.

18. Transportsystem nach einem der vorhergehenden Ansprüche, **dadurch gekennzeichnet, dass** der Ladeboden (11) mit einer oder mehreren Kugel- oder Rollenbahnen ausgestattet ist.

19. Transportsystem nach einem der vorhergehenden Ansprüche, **dadurch gekennzeichnet, dass** der Ladeboden (11) mit Wänden, ggf. auch mit einem Dach oder Deckel, als Ladungssicherungsmittel ausgeführt ist.

20. Transportsystem nach einem der einem der vorhergehenden Ansprüche, **dadurch gekennzeichnet, dass** das Ladegerüst (1) lösbar und entnehmbar im Laderaum (2) des Transportfahrzeugs (3) angebracht ist.

21. Transportsystem nach Anspruch 20, **dadurch gekennzeichnet, dass** das Ladegerüst (1) durch mehrere einzeln lösbare und entnehmbare Teil-Ladegerüste (1') gebildet ist.

22. Transportsystem nach einem der vorhergehenden Ansprüche, **dadurch gekennzeichnet, dass** das Ladegerüst (1) oder dessen Teil-Ladegerüste (1') im Leerzustand zusammenfaltbar und/oder zerlegbar sind.

23. Transportsystem nach einem der Ansprüche 1 bis 19, **dadurch gekennzeichnet, dass** der Laderaum (2) mit einem fest angebrachten Ladegerüst (1) oder als Ladegerüst (1) ausgeführt ist.

24. Transportsystem nach einem der vorhergehenden Ansprüche, **dadurch gekennzeichnet, dass** zumindest ein Teil der Pfosten (14) des Ladegerüsts (1) durch Rungen oder Wände oder Wandverstärkungen des Laderaumaufbaus (20) des Transportfahrzeugs (3) gebildet ist.

25. Transportsystem nach einem der vorhergehenden Ansprüche, **dadurch gekennzeichnet, dass** ein Boden (21) des Laderaums (2) selbst zumindest bereichsweise durch einen oder mehrere entnehmbare Ladeböden (11) gebildet ist.

26. Transportsystem nach einem der vorhergehenden Ansprüche, **dadurch gekennzeichnet, dass** die Pfosten (14) des Ladegerüsts (1) Mittel (15, 16) zum Verbinden von Pfosten (14) miteinander und/oder mit einem Laderaumaufbau (20) und/oder mit einem Fahrzeugrahmen (31) aufweisen.

27. Transportsystem nach einem der vorhergehenden Ansprüche, **dadurch gekennzeichnet, dass** zwischen einander benachbarten Ladeböden (11) Zwischen- oder Füllstücke anbringbar sind.

28. Transportsystem nach einem der vorhergehenden Ansprüche, **dadurch gekennzeichnet, dass** die Befestigungselemente (52) des Ladebodens (11) zum Befestigen der Sicherungsmittel (51) durch material- und/oder formverstärkte Bodenbereiche und/oder durch in den Ladeboden (11) integrierte Befestigungselemente (521) gebildet sind.

29. Transportsystem nach einem der vorhergehenden Ansprüche, **dadurch gekennzeichnet, dass** der Ladeboden (11) zur Stapelung mehrerer unbeladener Ladeböden (11) ineinander mit einer Randabstufung oder Randabschrägung (111) versehen ist.

30. Transportsystem nach einem der vorhergehenden Ansprüche, **dadurch gekennzeichnet, dass** die Abmessungen des Ladebodens (11) in wenigstens einer horizontalen Erstreckungsrichtung, vorzugsweise mittels Teleskopverstellung, veränderbar sind.

31. Transportsystem nach einem der vorhergehenden Ansprüche, **dadurch gekennzeichnet, dass** die Bodenträger (12) und/oder der Ladeboden (11) an ihren Berührungsflächen Gleitelemente (131) aufweisen, die vorzugsweise auswechselbar sind und die vorzugsweise aus Kunststoff bestehen.

32. Transportsystem nach einem der vorhergehenden Ansprüche, **dadurch gekennzeichnet, dass** der Ladeboden (11) an seinen seitlichen Kanten mit Gleitleisten aus Kunststoff versehen ist.

33. Transportsystem nach einem der vorhergehenden Ansprüche, **dadurch gekennzeichnet, dass** das Ladungssicherungsmittel (51) aus mindestens zwei spannbaren Zugmitteln (511), jeweiligen zugehörigen Spannvorrichtungen (512) und Verbindungsmitteln (513) zum Verbinden der Zugmittel (511) mit den Befestigungsmitteln (52) des Ladebodens (11) besteht und dass jedes Zugmittel (511) über die zugehörige Spannvorrichtung (512) einzeln spannbar ist.

## Claims

1. Transport system having a loading rack (1), which is arranged or is attachable in a loading space (2) of a transport vehicle (3), and having at least one loading floor (11), which is insertable into the loading rack (1) and is removable from the loading rack (1), wherein the loading rack (1) has posts (14) and, attached thereto, floor supports (12) for receiving the at least one loading floor (11), wherein a locking system (4) having interacting arresting means (40, 41) for the releasable arresting, in a manner secure in transit, of the loading floor (11) in the loading rack (1) is provided on the floor supports (12) and/or posts (14) and on the/each loading floor (11), wherein the loading floor (11) has fastening elements (52) for at least one load-securing means (51) for securing in transit loads (5) which are to be transported on the loading floor (11), and wherein the loads (5) can be placed on the loading floor (11), and tied down for transport by means of the load-securing means (51), outside of the loading space (2) before the loading floor (11) is inserted into the loading rack (1),
**characterized**
**in that** the loading floor and/or the loading rack (1) have guiding and centring means for assisting the insertion of the loading floor into the loading rack (1) and for assisting in generating positioning accuracy.

2. Transport system according to Claim 1, **characterized in that** the guiding and centring means have lead-in chamfers or stops.

3. Transport system according to Claim 1 or 2, **characterized in that** the guiding and centring means are fixedly attached or adjustable.

4. Transport system according to one of the preceding claims, **characterized in that** the guiding and centring means form parts of the locking system (4).

5. Transport system according to one of the preceding claims, **characterized in that** the guiding and centring means serve as intermediate pieces or filler pieces between adjacent loading floors.

6. Transport system according to one of the preceding claims, **characterized in that** the floor supports (12) are adjustable in height on the posts (14).

7. Transport system according to one of the preceding claims, **characterized in that** the floor supports (12) are detachable from the posts (14).

8. Transport system according to one of the preceding claims, **characterized in that** an automatic or remote-controlled locking of the loading floor (11) in its transport position in the loading rack (1) can be established by means of the locking system (4) and **in that** an intended unlocking of the locking system (4) can be carried out manually or by remote control.

9. Transport system according to Claim 8, **characterized in that** the locking system (4) is actuatable by a loading device (7), in particular a fork lift or crane, which inserts the loading floor (11) into the loading rack (1) and removes said loading floor (11) from the loading rack (1).

10. Transport system according to Claim 9, **characterized in that** the locking system (4) is actuatable by the burdening or unburdening and/or introduction/attachment or withdrawal of the loading device (7).

11. Transport system according to Claim 9 or 10, **characterized in that** the locking system (4) is additionally blockable, in a form-fitting or force-fitting manner, in the unlocking direction by the unburdening and/or by the withdrawal of the loading device (7).

12. Transport system according to one of Claims 9 to 11, **characterized in that** the locking system (4) is additionally blockable, in a form-fitting manner, by means of at least one elastic element, such as a spring or a gas-pressure damper, by the unburdening and/or by the withdrawal of the loading device (7).

13. Transport system according to one of Claims 9 to 12, **characterized in that** the locking system (4) is blockable by means of a pre-loading force, such as a spring force, by the unburdening and/or by the withdrawal of the loading device (7).

14. Transport system according to one of Claims 1 to 7, **characterized in that** the locking system (4) is manually actuatable both for locking and for unlocking the loading floor (11).

15. Transport system according to one of the preceding claims, **characterized in that** the loading floor (11), on its corners which interact in each case with one floor support (12), has in each case one securing arm (41), which is pivotable inwardly and outwardly or is retractable and extendable and which is engageable with or disengageable from an opening (40) in the assigned floor support (12) or post (14), for securing the loading floor (11) in the loading rack (1).

16. Transport system according to one of the preceding claims, **characterized in that** the loading floor (11) has at least one receptacle (17) for the fork of a fork lift (7) and/or has means (18) for the fastening of slinging means of a lifting gear or crane.

17. Transport system according to one of the preceding claims, **characterized in that** the loading floor (11) is implemented in a frame-like manner.

18. Transport system according to one of the preceding claims, **characterized in that** the loading floor (11) is equipped with one or more ball or roller tracks.

19. Transport system according to one of the preceding claims, **characterized in that** the loading floor (11) is implemented with walls, optionally also with a roof or cover, as a load-securing means.

20. Transport system according to one of the preceding claims, **characterized in that** the loading rack (1) is attached in a releasable and removable manner in the loading space (2) of the transport vehicle (3).

21. Transport system according to Claim 20, **characterized in that** the loading rack (1) is formed by a plurality of individually releasable and removable loading sub-racks (1').

22. Transport system according to one of the preceding claims, **characterized in that** the loading rack (1) or its loading sub-racks (1') in the empty state can be folded and/or disassembled.

23. Transport system according to one of Claims 1 to 19, **characterized in that** the loading space (2) is implemented with a fixedly attached loading rack (1) or as a loading rack (1).

24. Transport system according to one of the preceding claims, **characterized in that** at least some of the posts (14) of the loading rack (1) are formed by stakes or walls or wall reinforcements of the loading space body (20) of the transport vehicle (3).

25. Transport system according to one of the preceding claims, **characterized in that** a floor (21) of the loading space (2) is itself at least regionally formed by one or more removable loading floors (11).

26. Transport system according to one of the preceding claims, **characterized in that** the posts (14) of the loading rack (1) have means (15, 16) for connecting posts (14) to one another and/or to a loading space body (20) and/or to a vehicle frame (31).

27. Transport system according to one of the preceding claims, **characterized in that** intermediate pieces or filler pieces are attachable between loading floors (11) which are adjacent to one another.

28. Transport system according to one of the preceding claims, **characterized in that** the fastening elements (52) of the loading floor (11) for fastening the securing means (51) are formed by material-reinforced and/or shape-reinforced floor regions and/or by fastening elements (521) which are integrated in the loading floor (11).

29. Transport system according to one of the preceding claims, **characterized in that**, for the stacking inside one another of a plurality of unladen loading floors (11), the loading floor (11) is provided with a marginal shoulder or a marginal bevel (111).

30. Transport system according to one of the preceding claims, **characterized in that** the dimensions of the loading floor (11) can be modified, preferably by means of telescopic adjustment, in at least one horizontal direction of extent.

31. Transport system according to one of the preceding claims, **characterized in that** the floor supports (12) and/or the loading floor (11), on their contact faces, have sliding elements (131) which are preferably interchangeable and which are preferably composed of plastic.

32. Transport system according to one of the preceding claims, **characterized in that** the loading floor (11), on its lateral edges, is provided with sliding strips composed of plastic.

33. Transport system according to one of the preceding claims, **characterized in that** the load-securing means (51) is composed of at least two traction means (511) which can be tensioned, respectively assigned tensioning devices (512), and connection means (513) for connecting the traction means (511) to the fastening means (52) of the loading floor (11), and **in that** each traction means (511) can be individually tensioned via the assigned tensioning device (512).

## Revendications

1. Système de transport avec une charpente de chargement (1) disposée ou adaptable dans un espace de chargement (2) d'un véhicule de transport (3) et avec au moins un plateau de chargement (11), qui peut être introduit dans la charpente de chargement (1) et retiré hors de la charpente de chargement (1), dans lequel la charpente de chargement (1) comporte des montants (14) et des supports de plateaux (12) fixés à ceux-ci pour recevoir ledit au moins un plateau de chargement (11), dans lequel il est prévu sur les supports de plateaux (12) et/ou sur les montants (14) et sur le/chaque plateau de chargement (11) un système de verrouillage (4) avec des moyens d'arrêt coopérant entre eux (40, 41) pour l'arrimage détachable, sécurisé pendant le transport, du plateau de chargement (11) dans la charpente de chargement (1), dans lequel le plateau de chargement (11) présente des éléments de fixation (52) pour au moins un moyen de blocage de charge (51) destiné au blocage pendant le transport d'une charge de marchandises (5) à transporter sur le plateau de chargement (11) et dans lequel la charge de marchandises (5) peut être déposée sur le plateau de chargement (11) à l'extérieur de l'espace de chargement (2) et peut être fixée au moyen du moyen de blocage de charge (51) pour le transport, avant que le plateau de chargement (11) soit introduit dans la charpente de chargement (1), **caractérisé en ce que** le plateau de chargement et/ou la charpente de chargement (1) comportent des moyens de guidage et de centrage pour assister l'introduction du plateau de chargement dans la charpente de chargement (1) et pour contribuer à l'exactitude de positionnement.

2. Système de transport selon la revendication 1, **caractérisé en ce que** les moyens de guidage et de centrage présentent des chanfreins d'introduction ou des butées.

3. Système de transport selon la revendication 1 ou 2, **caractérisé en ce que** les moyens de guidage et de centrage sont montés de façon fixe ou sont réglables.

4. Système de transport selon l'une quelconque des revendications précédentes, **caractérisé en ce que** les moyens de guidage et de centrage forment des parties du système de verrouillage (4).

5. Système de transport selon l'une quelconque des revendications précédentes, **caractérisé en ce que** les moyens de guidage et de centrage servent de pièces intermédiaires ou de remplissage entre des plateaux de chargement voisins.

6. Système de transport selon l'une quelconque des revendications précédentes, **caractérisé en ce que** les supports de plateaux (12) sont réglables en hauteur sur les montants (14).

7. Système de transport selon l'une quelconque des revendications précédentes, **caractérisé en ce que** les supports de plateaux (12) peuvent être enlevés des montants (14).

8. Système de transport selon l'une quelconque des revendications précédentes, **caractérisé en ce qu'**un verrouillage automatique ou télécommandé du plateau de chargement (11) dans sa position de transport dans la charpente de chargement (1) peut être réalisé au moyen du système de verrouillage (4) et **en ce qu'**un déverrouillage prédéterminé du système de verrouillage (4) peut être effectué manuellement ou par télécommande.

9. Système de transport selon la revendication 8, **caractérisé en ce que** le système de verrouillage (4) peut être actionné par un dispositif de chargement (7), en particulier un chariot élévateur à fourche ou une grue, qui introduit le plateau de chargement (11) dans la charpente de chargement (1) et qui le retire hors de la charpente de chargement (1).

10. Système de transport selon la revendication 9, **caractérisé en ce que** le système de verrouillage (4) peut être actionné par la charge ou la décharge et/ou par l'introduction/insertion ou l'enlèvement du dispositif de chargement (7).

11. Système de transport selon la revendication 9 ou 10, **caractérisé en ce que** le système de verrouillage (4) peut en plus être bloqué par emboîtement ou par friction dans la direction de déverrouillage par la décharge et/ou par l'enlèvement du dispositif de chargement (7).

12. Système de transport selon l'une quelconque des revendications 9 à 11, **caractérisé en ce que** le système de verrouillage (4) peut en plus être bloqué par emboîtement par la décharge et/ou par l'enlèvement du dispositif de chargement (7) au moyen d'au moins un élément élastique, comme un ressort ou un amortisseur à pression de gaz.

13. Système de transport selon l'une quelconque des revendications 9 à 12, **caractérisé en ce que** le système de verrouillage (4) peut être bloqué par la décharge et/ou par l'enlèvement du dispositif de chargement (7) au moyen d'une force de précharge, comme une force de ressort.

14. Système de transport selon l'une quelconque des revendications 1 à 7, **caractérisé en ce que** le système de verrouillage (4) peut être actionné manuellement aussi bien pour le verrouillage que pour le déverrouillage du plateau de chargement (11).

15. Système de transport selon l'une quelconque des revendications précédentes, **caractérisé en ce que** le plateau de chargement (11) présente, à ses angles coopérant respectivement avec un support de plateau (12), respectivement un bras de fixation (41) capable de pivoter vers l'intérieur et vers l'extérieur ou capable de coulisser vers l'intérieur et vers l'extérieur et pouvant être mis en prise et hors prise avec une ouverture (40) dans le support de plateau (12) ou le montant (14) associé, pour la fixation du plateau de chargement (11) dans la charpente de chargement (1).

16. Système de transport selon l'une quelconque des revendications précédentes, **caractérisé en ce que** le plateau de chargement (11) présente au moins un logement (17) pour les fourches d'un chariot élévateur à fourche (7) et/ou des moyens (18) pour la fixation de moyens de butée d'un engin de levage ou d'une grue.

17. Système de transport selon l'une quelconque des revendications précédentes, **caractérisé en ce que** le plateau de chargement (11) est réalisé en forme de cadre.

18. Système de transport selon l'une quelconque des revendications précédentes, **caractérisé en ce que** le plateau de chargement (11) est équipé d'une ou de plusieurs tables à billes ou à rouleaux.

19. Système de transport selon l'une quelconque des revendications précédentes, **caractérisé en ce que** le plateau de chargement (11) est réalisé avec des parois, éventuellement aussi avec un toit ou un couvercle, comme moyens de blocage de la charge.

20. Système de transport selon l'une quelconque des revendications précédentes, **caractérisé en ce que** la charpente de chargement (1) est installée de façon détachable et amovible dans l'espace de chargement (2) du véhicule de transport (3).

21. Système de transport selon la revendication 20, **caractérisé en ce que** la charpente de chargement (1) est formée par plusieurs charpentes de chargement partielles (1') détachables et amovibles individuellement.

22. Système de transport selon l'une quelconque des revendications précédentes, **caractérisé en ce que** la charpente de chargement (1) ou ses charpentes de chargement partielles (1') sont repliables et/ou démontables à vide.

23. Système de transport selon l'une quelconque des revendications 1 à 19, **caractérisé en ce que** l'espace de chargement (2) est réalisé avec une charpente de chargement (1) installée de façon fixe ou comme charpente de chargement (1).

24. Système de transport selon l'une quelconque des revendications précédentes, **caractérisé en ce qu'**au moins une partie des montants (14) de la charpente de chargement (1) sont formés par des colonnes ou des parois ou des renforts de parois de la structure de l'espace de chargement (20) du véhicule de transport (3).

25. Système de transport selon l'une quelconque des revendications précédentes, **caractérisé en ce qu'**un plancher (21) de l'espace de chargement (2) est formé lui-même au moins localement par un ou plusieurs plateau(x) de chargement amovible(s) (11).

26. Système de transport selon l'une quelconque des revendications précédentes, **caractérisé en ce que** les montants (14) de la charpente de chargement (1) présentent des moyens (15, 16) pour relier des montants (14) les uns aux autres et/ou à une structure de l'espace de chargement (20) et/ou à un châssis de véhicule (31).

27. Système de transport selon l'une quelconque des revendications précédentes, **caractérisé en ce que** des pièces intermédiaires ou de remplissage peuvent être placées entre des plateaux de chargement (11) voisins l'un de l'autre.

28. Système de transport selon l'une quelconque des revendications précédentes, **caractérisé en ce que** les éléments de fixation (52) du plateau de chargement (11) destinés à la fixation des moyens de blocage (51) sont formés par des zones de plateau renforcées par de la matière et/ou par la forme et/ou par des éléments de fixation (521) intégrés dans le plateau de chargement (11).

29. Système de transport selon l'une quelconque des revendications précédentes, **caractérisé en ce que** le plateau de chargement (11) est muni d'un épaulement périphérique ou d'un chanfrein périphérique (111) pour l'empilage de plusieurs plateaux de chargement (11) non chargés l'un dans l'autre.

30. Système de transport selon l'une quelconque des revendications précédentes, **caractérisé en ce que** les dimensions du plateau de chargement (11) peuvent être modifiées dans au moins une direction d'extension horizontale, de préférence au moyen d'un réglage télescopique.

31. Système de transport selon l'une quelconque des revendications précédentes, **caractérisé en ce que** les supports de plateaux (12) et/ou le plateau de chargement (11) présentent sur leurs faces de contact des éléments de glissement (131), qui sont de préférence remplaçables et qui se composent de préférence de matière plastique.

32. Système de transport selon l'une quelconque des revendications précédentes, **caractérisé en ce que** le plateau de chargement (11) est muni sur ses arêtes latérales de lattes de glissement en matière plastique.

33. Système de transport selon l'une quelconque des revendications précédentes, **caractérisé en ce que** le moyen de blocage de charge (51) se compose d'au moins deux moyens de traction extensibles (511), de dispositifs de tension respectifs correspondants (512) et de moyens de liaison (513) pour relier les moyens de traction (511) aux moyens de fixation (52) du plateau de chargement (11) et **en ce que** chaque moyen de traction (511) peut être tendu individuellement par le dispositif de tension correspondant (512).
